# EUROPEAN PATENT APPLICATION

(11) **EP 4 851 106 A1**
(43) Date of publication of application: **09.12.2026**
(21) Application number: 24922363.7
(22) Date of filing: 30.01.2024
(51) Int. Cl.: C01B 13/11

(54) **OZONE GENERATION DEVICE AND OZONE GENERATION METHOD**

(71) Applicant: TMEIC Corporation, Tokyo 104-0031 (JP)
(72) Inventor: HIRAMATSU Kosei, Tokyo 104-0031 (JP); ONO Yuji, Tokyo 104-0031 (JP); NAKAMURA Noriyuki, Tokyo 104-0031 (JP); NISHIMURA Shinichi, Tokyo 104-0031 (JP); SATO Takasho, Tokyo 104-0031 (JP); OINUMA Gaku, Tokyo 100-8310 (JP); SHIOTA Arufa, Tokyo 100-8310 (JP); KUZUMOTO Masaki, Tokyo 100-8310 (JP)
(74) Representative: TBK
(86) International application number: PCT/JP2024/002801
(87) International publication number: WO 2025/163729

(57) **Abstract**

An object of the present disclosure is to provide a structure of an ozone generation apparatus capable of generating ozone gas having a relatively high concentration while suppressing an amount of cooling medium of to a bare minimum. In the ozone generation apparatus according to the present disclosure, material gas (G1) is supplied to a center from a whole circumference of a discharge space (6), and ozone gas (G2) obtained in the discharge space (6) is outputted outside from a discharge center space (S1) through a gas flow outlet (12). A cooling medium flow path (4) provided in a low voltage electrode (1) has a center priority cooling medium flow path structure of flowing a cooling medium (C1) from a cooling medium inlet (4a) toward a cooling medium outlet (4b), thereby flowing the cooling medium (C1) to an electrode center region (D1) prior to an electrode surrounding region (D2).

## Description

### TECHNICAL FIELD

The present disclosure relates to an ozone generation apparatus having an electrode structure including plate-like first and second metal electrodes and an ozone generation method.

### BACKGROUND ART

A conventional ozone generation apparatus includes an ozone generation apparatus having an electrode structure including first and second metal electrodes each having a plate-like shape. Patent Document 1 discloses an ozone generator as such an ozone generation apparatus, for example.

The ozone generator disclosed in Patent Document 1 includes a plate-like low voltage electrode, a plate-like high voltage electrode facing a main surface of the low voltage electrode, a plate-like dielectric body provided between the lower voltage electrode and the high voltage electrode, and a spacer for forming a discharge space having a small thickness in a laminated direction. An ozone gas path is provided to the low voltage electrode.

Oxygen gas as material gas flows from a whole circumference of a discharge space toward a center thereof and is generated as ozone gas (ozonized oxygen gas) in the discharge space, and the generated ozone gas is outputted outside through an inner ozone gas path. In the meanwhile, a cooling water path is provided to the low voltage electrode, and cooling water as a cooling medium flows in the cooling water path, thus a gas temperature in the discharge space is reduced.

### PRIOR ART DOCUMENTS

### PATENT DOCUMENT(S)

Patent Document 1: Japanese Patent Application Laid-Open No. 2003-160312

### SUMMARY

### PROBLEM TO BE SOLVED BY THE INVENTION

In a conventional ozone generation apparatus typified by the ozone generator disclosed in Patent Document 1, a cooling medium flow path (cooling water path) for flowing a cooling medium (cooling water) is provided in a low voltage electrode to reduce a gas temperature in a discharge space.

However, a plurality of partial cooling medium flow paths are provided along a circumferential direction in the low voltage electrode as the cooling medium flow paths provided to the low voltage electrode to flow the cooling medium to each of the plurality of partial cooling medium flow paths.

In this manner, the cooling medium flow path provided in the electrode of the conventional ozone generation apparatus has a structure for reducing the gas temperature in the whole discharge space, thus there is a problem that an amount of the cooling medium to be used is not optimized, and optimized increase in concentration of an ozone concentration of the generated ozone gas is not achieved.

An object of the present disclosure is to solve the above problems, and provide an ozone generation apparatus and an ozone generation method capable of generating ozone gas having a relatively high concentration while suppressing an amount of cooling medium to a bare minimum.

### MEANS TO SOLVE THE PROBLEM

An ozone generation apparatus according to the present disclosure includes: a plate-like first metal electrode; a plate-like second metal electrode disposed to face the first metal electrode, wherein at least one of the first and second metal electrodes includes a gas flow outlet in a center part; and at least one electrode dielectric body provided adjacent to one of the first and second metal electrodes between the first and second metal electrodes, wherein a discharge space is provided to have contact with the at least one electrode dielectric body between the first and second metal electrodes, dielectric barrier discharge is generated in the discharge space by applying voltage between the first and second metal electrodes; material gas is supplied to the discharge space, and ozone gas is obtained by passing the material gas through the discharge space where the dielectric barrier discharge is generated, the discharge space includes a discharge center space connected to the gas flow outlet and a discharge surrounding space around the discharge center space, and the material gas is supplied from the discharge surrounding space to the discharge center space, at least one of the first and second metal electrodes is a metal electrode with a built-in flow path, the metal electrode with the built-in flow path includes an electrode center region overlapped with the discharge center space in a plan view and an electrode surrounding region overlapped with the discharge surrounding space in a plan view, the metal electrode with the built-in flow path includes a cooling medium flow path flowing a cooling medium inside, and the cooling medium flow path is formed in a range from the electrode center region to the electrode surrounding region, the ozone gas obtained in the discharge space is outputted outside from the discharge center space through the gas flow outlet, and the cooling medium flow path includes a center priority cooling medium flow path structure of flowing the cooling medium in the electrode center region prior to the electrode surrounding region.

### EFFECTS OF THE INVENTION

In the ozone generation apparatus according to the present disclosure, the cooling medium flow path provided to the metal electrode with the built-in flow path has the center priority cooling medium flow path structure described above, thus a temperature of the electrode center region near the gas flow outlet can be kept relatively low. In the meanwhile, the material gas is supplied from the discharge surrounding space to the discharge center space, thus an ozone centration in the discharge center space tends to be higher than an ozone centration in the discharge surrounding space with regard to the ozone gas generated in the discharge space.

Accordingly, in the ozone generation apparatus according to the present disclosure, the cooling medium flow path provided to the metal electrode with the built-in flow path has the center priority cooling medium flow path structure described above to improve an effect of cooling the discharge center space, thus the amount of cooling medium can be suppressed to a bare minimum, and the ozone gas having a relatively high concentration can be generated.

These and other objects, features, aspects and advantages of the present disclosure will become more apparent from the following detailed description of the present disclosure when taken in conjunction with the accompanying diagrams.

### BRIEF DESCRIPTION OF DRAWINGS

[Fig. 1] is an explanation diagram schematically illustrating a principle of an ozone generation apparatus.
[Fig. 2] is an explanation diagram schematically illustrating a cross-sectional structure of an electrode unit as a basic configuration according to an embodiment 1.
[Fig. 3] is an explanation diagram schematically illustrating a planar structure of a cooling medium flow path of a low voltage electrode according to a first aspect of the embodiment 1.
[Fig. 4] is an explanation diagram schematically illustrating a discharge space on the low voltage electrode illustrated in Fig. 3.
[Fig. 5] is an explanation diagram (No. 1) schematically illustrating a cross-sectional structure of the low voltage electrode illustrated in Fig. 3.
[Fig. 6] is an explanation diagram (No. 2) schematically illustrating a cross-sectional structure of the low voltage electrode illustrated in Fig. 3.
[Fig. 7] is an explanation diagram schematically illustrating a planar structure of a cooling medium flow path of a low voltage electrode according to a second aspect of the embodiment 1.
[Fig. 8] is an explanation diagram (No. 1) schematically illustrating a cross-sectional structure of the low voltage electrode illustrated in Fig. 7.
[Fig. 9] is an explanation diagram (No. 2) schematically illustrating a cross-sectional structure of the low voltage electrode illustrated in Fig. 7.
[Fig. 10] is an explanation diagram schematically illustrating a planar structure of an ozone gas generation unit according to a third aspect of the embodiment 1.
[Fig. 11] is an explanation diagram (No. 1) schematically illustrating a cross-sectional structure of the ozone gas generation unit illustrated in Fig. 10.
[Fig. 12] is an explanation diagram (No. 2) schematically illustrating a cross-sectional structure of the ozone gas generation unit illustrated in Fig. 10.
[Fig. 13] is an explanation diagram schematically illustrating a planar structure of a cooling medium flow path of a low voltage electrode according to a fourth aspect of the embodiment 1.
[Fig. 14] is an explanation diagram schematically illustrating details of one branch refraction region in the low voltage electrode illustrated in Fig. 13.
[Fig. 15] is a graph illustrating a relationship between a flow amount of cooling water and an ozone concentration of ozone gas.
[Fig. 16] is a graph illustrating a relationship between a temperature of an electrode center region of the low voltage electrode and the ozone concentration according to the embodiment 1.
[Fig. 17] is an explanation diagram schematically illustrating a cross-sectional structure of an electrode unit as a basic configuration according to an embodiment 2.
[Fig. 18] is an explanation diagram schematically illustrating a cross-sectional structure of an electrode unit as a basic configuration according to an embodiment 3.
[Fig. 19] is an explanation diagram schematically illustrating a planar structure of a cooling medium flow path of a low voltage electrode according to a first aspect of the embodiment 3.
[Fig. 20] is an explanation diagram schematically illustrating a discharge space on the low voltage electrode illustrated in Fig. 19.
[Fig. 21] is an explanation diagram (No. 1) schematically illustrating a cross-sectional structure of the low voltage electrode illustrated in Fig. 19.
[Fig. 22] is an explanation diagram (No. 2) schematically illustrating a cross-sectional structure of the low voltage electrode illustrated in Fig. 19.
[Fig. 23] is an explanation diagram schematically illustrating a planar structure of a cooling medium flow path of a low voltage electrode according to a fourth aspect of the embodiment 3.
[Fig. 24] is an explanation diagram schematically illustrating details of one branch refraction region in the low voltage electrode illustrated in Fig. 23.
[Fig. 25] is an explanation diagram schematically illustrating a cross-sectional structure of an electrode unit as a basic configuration according to an embodiment 4.

### DESCRIPTION OF EMBODIMENT(S)

### <Principle of present disclosure>

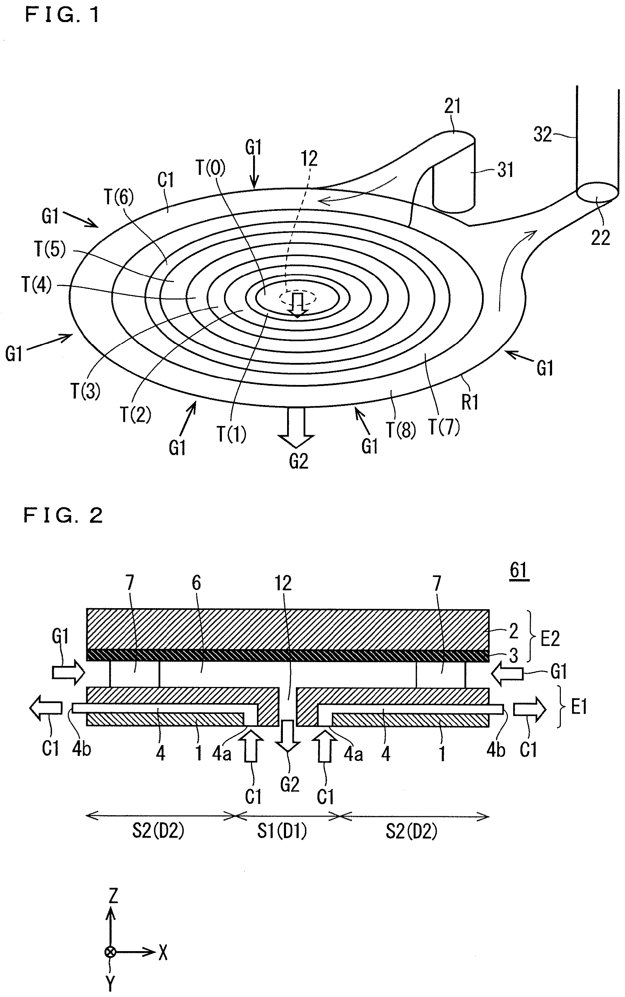

Fig. 1 is an explanation diagram schematically illustrating a principle of an ozone generation apparatus according to the present disclosure. Fig. 1 illustrates an electrode inner region R1 of a metal electrode with a built-in flow path including a cooling medium flow path inside. At least one of first and second metal electrodes each having a plate-like shape falls under the metal electrode with the built-in flow path.

A cooling medium C1 is supplied from an external cooling medium supply flow path 31 to the electrode inner region R1 of the metal electrode with the built-in flow path through a cooling medium supply port 21. After the cooling medium C1 is supplied into the electrode inner region R1, the cooling medium C1 is discharged to an external cooling medium discharge flow path 32 through a cooling medium discharge port 22.

Alternating-current voltage is applied between the first and second metal electrodes, thus dielectric barrier discharge can be generated in the discharge space 6. Herein, a space on an upper side of the electrode inner region R1 illustrated in Fig. 1 is assumed to be the discharge space 6.

When material gas G1 such as oxygen gas is supplied from a whole circumference of the discharge space 6 toward a center thereof while the dielectric barrier discharge is generated in the discharge space 6, ozone gas G2 can be obtained from the material gas G1 in the discharge space 6. The generated ozone gas G2 is outputted outside through a gas flow outlet 12 provided to pass through a center of the electrode inner region R1.

As described above, the cooling medium C1 is supplied to the electrode inner region R1, thus the electrode inner region R1 is cooled. For example, as illustrated in Fig. 1, temperature distributions T(0) to T(8) caused by the cooling medium C1 are concentrically located around the gas flow outlet 12, it is preferable that the temperature distributions T(0) to T(2) in a discharge center space near the gas flow outlet 12 are lowest.

It is because the ozone gas G2 generated in the discharge space 6 has a highest ozone concentration in the discharge center space in the discharge space 6, thus it is necessary to reduce the temperature of the discharge center space to prevent resolution of the ozone gas G2 in a high ozone concentration state.

It is ideal that the temperature distribution T(0) is lowest and the temperature distribution T(8) is highest, and when k = 0 to 7 is satisfied, T(k) < T(k+1) is preferably established. When such a temperature distributions T(0) to T(8) is set, it can be expected that an amount of the cooling medium C1 supplied to the electrode inner region R1 is suppressed to a bare minimum to generate the ozone gas G2 having a relatively high concentration.

### <Embodiment 1>

### (Basic configuration)

Fig. 2 is an explanation diagram schematically illustrating a cross-sectional structure of an electrode unit 61 as a basic configuration according to an embodiment 1. An ozone generation apparatus including the electrode unit 61 serves as an ozone generation apparatus according to the embodiment 1. Fig. 2 illustrates an XYZ rectangular coordinate system. As illustrated in Fig. 2, the electrode unit 61 includes electrode constituting parts E1 and E2 and a spacer 7 as main constituent elements.

The electrode constituting part E1 includes a low voltage electrode 1 as a main constituent element. The low voltage electrode 1 as a plate-like first metal electrode includes the gas flow outlet 12 passing through a center part of the low voltage electrode 1 as a gas flow outlet provided to the center part thereof.

The electrode constituting part E2 is provided on the low voltage electrode 1 of the electrode constituting part E1 via the spacer 7. The electrode constituting part E2 includes a high voltage electrode 2 and a dielectric body 3 as main constituent elements. The dielectric body 3 as an electrode dielectric body is formed on a lower surface of the high voltage electrode 2 as a plate-like second metal electrode. The dielectric body 3 is formed into a thin film-like shape.

In this manner, the high voltage electrode 2 as the plate-like second metal electrode is disposed to face the low voltage electrode 1 as the plate-like first metal electrode. The discharge space 6 is provided to have contact with the dielectric body 3 between the low voltage electrode 1 and the high voltage electrode 2.

In the basic configuration according to the embodiment 1 illustrated in Fig. 2, the dielectric body 3 as the electrode dielectric body is provided adjacent to the high voltage electrode 2, but may also be provided adjacent to the low voltage electrode 1. That is to say, it is sufficient that at least one electrode dielectric body is provided adjacent to at least one of the low voltage electrode 1 and the high voltage electrode 2 between the low voltage electrode 1 and the high voltage electrode 2.

However, the discharge space 6 needs to be provided to have contact with at least one electrode dielectric body between the low voltage electrode 1 and the high voltage electrode 2. That is to say, when the electrode dielectric body is formed in the electrode constituting part E1, the electrode dielectric body needs to be provided on an upper surface of the low voltage electrode 1.

Alternating-current voltage is applied between the low voltage electrode 1 and the high voltage electrode 2 in the electrode unit 61 illustrated in Fig. 2, thus dielectric barrier discharge can be generated in the discharge space 6. For example, the alternating-current voltage is applied to the high voltage electrode 2, and the low voltage electrode 1 is set to reference voltage such as ground voltage.

The discharge space 6 includes a discharge center space S1 connected to the gas flow outlet 12 and a discharge surrounding space S2 around the discharge center space S1.

As illustrated in Fig. 2, the material gas G1 such as oxygen gas is supplied from a whole circumference of the discharge space 6 toward a center thereof. That is to say, the material gas G1 is supplied from the discharge surrounding space S2 toward the discharge center space S1. The material gas G1 passes through the discharge space 6 in which the dielectric barrier discharge is generated, thus the ozone gas G2 is obtained.

The ozone gas G2 obtained in the discharge space 6 is outputted outside from the discharge center space S1 through the gas flow outlet 12.

The low voltage electrode 1 functions as the metal electrode with the built-in flow path, and includes a cooling medium flow path 4 flowing the cooling medium C1 inside. The low voltage electrode 1 functioning as the metal electrode with the built-in flow path includes an electrode center region D1 overlapped with the discharge center space S1 in a plan view and an electrode surrounding region D2 overlapped with the discharge surrounding space S2 in an XY plane in a plan view. Cooling water is considered as the cooling medium C1, for example.

The cooling medium flow path 4 provided in the low voltage electrode 1 includes a cooling medium inlet 4a in a center region in a lower surface of the low voltage electrode 1 and a cooling medium outlet 4b on a side of a side surface of the low voltage electrode 1, and is formed in a range from the electrode center region D1 to the electrode surrounding region D2. Then, the cooling medium flow path 4 provided in the low voltage electrode 1 has a center priority cooling medium flow path structure of flowing the cooling medium C1 from the cooling medium inlet 4a toward the cooling medium outlet 4b, thereby flowing the cooling medium C1 to the electrode center region D1 prior to the electrode surrounding region D2.

In the ozone generation apparatus including the electrode unit 61 as the basic configuration of the embodiment 1 of the present disclosure, the cooling medium flow path 4 provided to the low voltage electrode 1 functioning as the metal electrode with the built-in flow path has the center priority cooling medium flow path structure described above, thus a temperature of the electrode center region D1 near the gas flow outlet 12 can be kept relatively low.

In the meanwhile, the material gas G1 is supplied from the discharge surrounding space S2 toward the discharge center space S1, thus with regard to the ozone gas G2 generated in the discharge space 6, an ozone concentration in the discharge center space S1 tends to be higher than that in the discharge surrounding space S2.

Accordingly, in the ozone generation apparatus as the basic configuration of the embodiment 1, the cooling medium flow path 4 provided to the low voltage electrode 1 has the center priority cooling medium flow path structure described above to improve the effect of cooling the discharge center space S1, thereby being able to reduce the temperature of the discharge center space S1 and suppress the phenomenon of resolution of the ozone gas G2 in the high ozone concentration state to a bare minimum.

As a result, the ozone generation apparatus as the basic configuration of the embodiment 1 can suppress the amount of the cooling medium C1 to a bare minimum and generate the ozone gas G2 having a relatively high concentration.

In the electrode unit 61 illustrated in Fig. 2, the low voltage electrode 1 functions as the metal electrode with the built-in flow path in the low voltage electrode 1 and the high voltage electrode 2, however, it is sufficient that at least one of the low voltage electrode 1 and the high voltage electrode 2 functions as the metal electrode with the built-in flow path.

For example, it is also applicable that the high voltage electrode 2 functions as the metal electrode with the built-in flow path and a cooling medium flow path corresponding to the cooling medium flow path 4 is provided in the high voltage electrode 2. However, the cooling medium flowing in the cooling medium flow path in the high voltage electrode 2 needs to have insulation properties.

### (Ozone generation method)

An ozone generation method using the ozone generation apparatus as the basic configuration of the embodiment 1 in Fig. 2 (hereinafter abbreviated as "the ozone generation method for the basic configuration" in the embodiment 1 and the embodiment 2 in some cases) includes the following Steps (a) to (c).

Step (a): Alternating-current voltage is applied between the low voltage electrode 1 as the first metal electrode and the high voltage electrode 2 as the second metal electrode to generate the dielectric barrier discharge in the discharge space 6.

Step (b): The cooling medium C1 flows from the cooling medium inlet 4a to the cooling medium outlet 4b in the cooling medium flow path 4 in the low voltage electrode 1 to perform center priority cooling medium flow path setting processing of flowing the cooling medium C1 in the electrode center region D1 prior to the electrode surrounding region D2.

Step (c): The material gas G1 is supplied from a whole circumference of the discharge surrounding space S2 toward the discharge center space S1 to obtain the ozone gas G2 in the discharge space 6.

Steps (a) to (c) described above are performed, thus the ozone gas G2 obtained in the discharge space 6 is outputted outside from the discharge center space S1 through the gas flow outlet 12. An order of performing Steps (a) to (c) is optionally set.

In the ozone generation method for the basic configuration of the embodiment 1, the center priority cooling medium flow path setting processing is performed by Step (b) described above, thus the temperature of the electrode center region D1 near the gas flow outlet 12 can be kept relatively low. In the meanwhile, with regard to the ozone gas G2 generated in the discharge space 6, the ozone concentration in the discharge center space S1 tends to be higher than that in the discharge surrounding space S2.

Accordingly, the ozone generation method for the basic configuration performs Step (b) and improves the effect of cooling the discharge center space S1, thereby being able to suppress the amount of the cooling medium C1 to a bare minimum and generate the ozone gas G2 having a relatively high concentration.

### (First aspect)

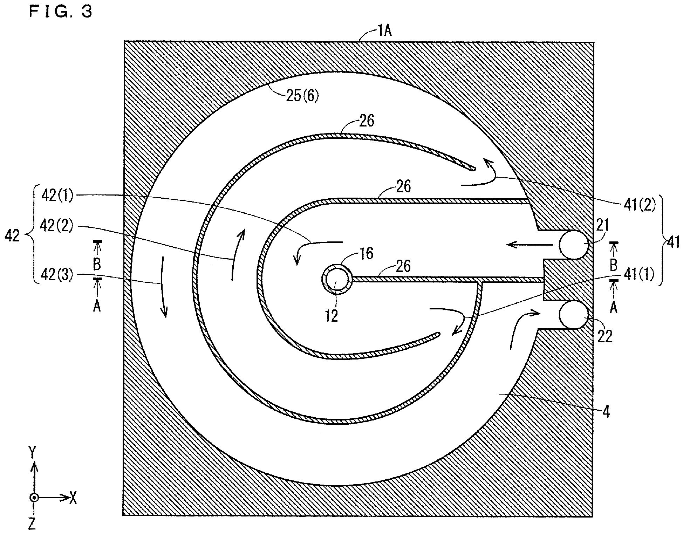

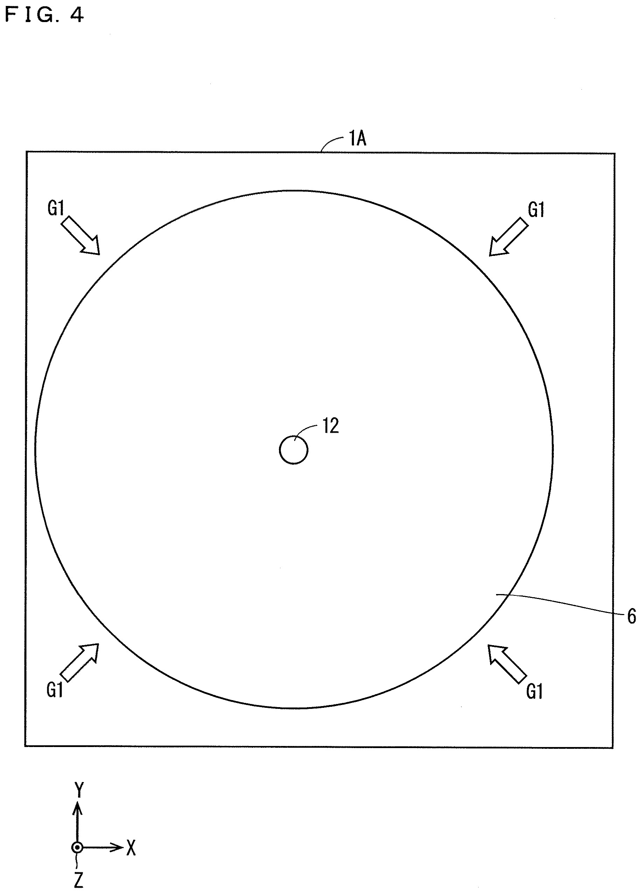

Fig. 3 is an explanation diagram schematically illustrating a planar structure of the cooling medium flow path 4 of a low voltage electrode 1A according to the ozone generation apparatus as a first aspect of the embodiment 1. Fig. 4 is an explanation diagram schematically illustrating the discharge space 6 on the low voltage electrode 1A illustrated in Fig. 3. Each of Fig. 3 and Fig. 4 illustrates an XYZ rectangular coordinate system.

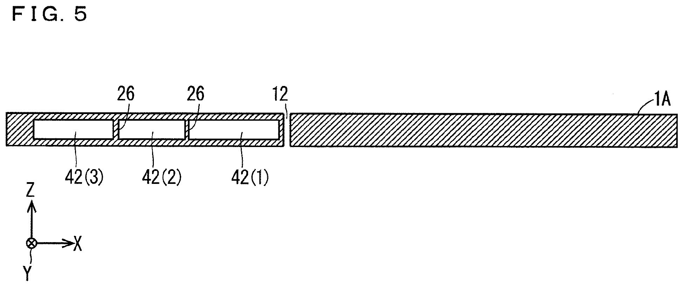

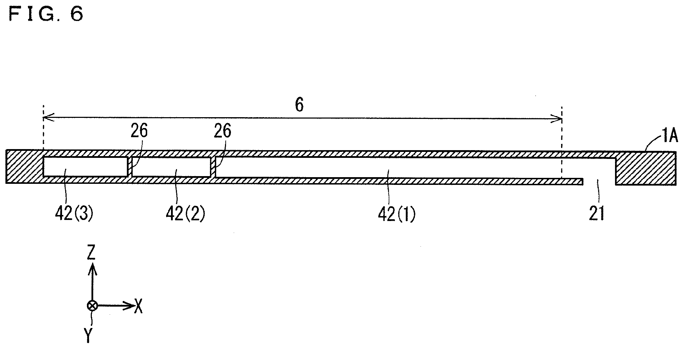

Fig. 5 and Fig. 6 are explanation diagrams each schematically illustrating a cross-sectional structure of the low voltage electrode 1A illustrated in Fig. 3. Fig. 5 illustrates an A-A cross section in Fig. 3, and Fig. 6 illustrates a B-B cross section in Fig. 3. Each of Fig. 5 and Fig. 6 illustrates an XYZ rectangular coordinate system. The first aspect of the embodiment 1 is described hereinafter with reference to Fig. 3 to Fig. 6. The first aspect indicates a specific structure of a low voltage electrode 1A corresponding to the low voltage electrode 1 in the electrode unit 61 as the basic configuration illustrated in Fig. 2.

As illustrated in Fig. 3 and Fig. 4, the low voltage electrode 1A has a rectangular shape in an XY plane in a plan view. In the meanwhile, as illustrated in Fig. 4, the discharge space 6 has a circular shape in an XY plane in a plan view. For example, when the high voltage electrode 2 has a circular planar shape, the discharge space 6 formed between the low voltage electrode 1A and the high voltage electrode 2 can have a circular shape.

As illustrated in Fig. 3 and Fig. 6, the cooling medium supply port 21 and the cooling medium discharge port 22 are located in a lower surface of the low voltage electrode 1A. The cooling medium supply port 21 receives the cooling medium C1 from outside, and the cooling medium discharge port 22 discharges the cooling medium C1 outside. The cooling medium discharge port 22 also has a cross-sectional structure similar to the cooling medium supply port 21 illustrated in Fig. 6.

In the low voltage electrode 1 of the first aspect, a flow path outer wall 25 is provided along an outer periphery, and a flow path separation wall 26 is provided inside, thus the cooling medium flow path 4 includes curved flow paths 41(1) and 41(2) changing a flow path direction and circumferential flow paths 42(1) to 42(3) each flowing the cooling medium C1 along the flow path direction. The curved flow paths 41(1) and 41(2) constitute at least one curved flow path, and the circumferential flow paths 42(1) to 42(3) constitute a plurality of circumferential flow paths. The flow path outer wall 25 is formed to coincide with an outer periphery of the discharge space 6 in an XY plane in a plan view.

As illustrated in Fig. 3 and Fig. 6, the cooling medium supply port 21 and the cooling medium discharge port 22 are disposed in positions so as not to be overlapped with the discharge space 6 in an XY plane in a plan view. Furthermore, the cooling medium supply port 21 and the cooling medium discharge port 22 are provided on a side of a +X direction in the same direction with respect to the discharge space 6 in a plan view.

The gas flow outlet 12 blocked from the cooling medium C1 flowing in the cooling medium flow path 4 is provided to the cooling medium flow path 4 by a gas flow outlet wall 16.

A pair of circumferential flow path 42(i) and circumferential flow path 42(i+1) (i = any of 1 and 2) adjacent to each other in the circumferential flow paths 42(1) to 42(3) are connected to each other so that flow path directions thereof are opposite to each other via the curved flow path 41(i).

That is to say, the pair of circumferential flow paths adjacent to each other in the plurality of circumferential flow paths (circumferential flow paths 42(1) to 42(3)) are connected so that the flow path directions thereof are opposite to each other via one curved flow path in at least one curved flow path (curved flow paths 41(1) and 41(2)).

The circumferential flow path 42(1) is connected to the cooling medium supply port 21, and the circumferential flow path 42(3) is connected to the cooling medium discharge port 22. Accordingly, the circumferential flow path 42(1) serves as a supply-side circumferential flow path, and the circumferential flow path 42(3) serves as a discharge-side circumferential flow path.

That is to say, the plurality of circumferential flow paths (the circumferential flow paths 42(1) to 42(3)) include the supply-side circumferential flow path (the circumferential flow path 42(1)) connected to the cooling medium supply port 21 and the discharge-side circumferential flow path (the circumferential flow path 42(3)) connected to the cooling medium discharge port 22.

Then, the circumferential flow path 42(1) as the supply-side circumferential flow path is located closest to the gas flow outlet 12 and the circumferential flow path 42(3) as the discharge-side circumferential flow path is located farthest away from the gas flow outlet 12 in the circumferential flow paths 42(1) to 42(3).

In this manner, the cooling medium flow path 4 provided in the low voltage electrode 1A achieves a circumferential circulating flow path structure of flowing the cooling medium C1 to the circumferential flow paths 42(1) to 42(3) and the curved flow paths 41(1) and 41(2) so that the cooling medium C1 is supplied firstly from the cooling medium supply port 21 to the circumferential flow path 42(1) and is discharged outside finally from the circumferential flow path 42(3) through the cooling medium discharge port 22.

That is to say, in the first aspect of the embodiment 1, the circumferential circulating flow path structure is achieved as the center priority cooling medium flow path structure of the basic configuration, and a flow path width of each of the circumferential flow paths 42(1) to 42(3) and the curved flow paths 41(1) and 41(2) is set within a constant range.

The ozone generation apparatus according to the first aspect of the embodiment 1 in the present disclosure achieves the circumferential circulating flow path structure described above as the center priority cooling medium flow path structure. Thus, a flow rate of the cooling medium C1 flowing in the cooling medium flow path 4 is improved by setting the flow path width within the constant range and thermal conductivity of the cooling medium C1 can be kept relatively high, thus the effect of cooling the discharge space 6 by the cooling medium C1 can be improved.

The cooling medium supply port 21 and the cooling medium discharge port 22 are not overlapped with the discharge space 6 in a plan view in the ozone generation apparatus according to the first aspect of the embodiment 1. Thus, even when the cooling medium supply port 21 and the cooling medium discharge port 22 are provided, the discharge space 6 can be provided between the low voltage electrode 1A of the electrode constituting part E1 and the electrode constituting part E2 with no trouble.

In the first aspect of the embodiment 1, the cooling medium supply port 21 and the cooling medium discharge port 22 are provided in the same direction with respect to the discharge space 6 in a plan view, thus can be disposed close to each other, and the cooling medium C1 can be supplied to and discharged from outside relatively easily.

In the first aspect of the embodiment 1, the discharge space 6 has the circular shape in a plan view, thus the material gas G1 can be uniformly supplied from the whole circumference of the discharge space 6 toward the discharge center space.

### (Ozone generation method)

The ozone generation method using the ozone generation apparatus as the first aspect of the embodiment 1 illustrated in Fig. 3 to Fig. 6 includes the following Steps (b-1) and (b-2) as the center priority cooling medium flow path setting processing described above in Step (b) performed in the ozone generation method for the basic configuration.

Step (b-1): The cooling medium C1 is supplied to the circumferential flow path 42(1) as the supply-side circumferential flow path from the cooling medium supply port 21.

Step (b-2): The cooling medium C1 is discharged to the cooling medium discharge port 22 from the circumferential flow path 42(3) as the discharge-side circumferential flow path.

When Steps (b-1) and (b-2) described above are performed, set in the cooling medium flow path 4 is the circumferential circulating flow path in which the cooling medium C1 flows in the circumferential flow paths 42(1) to 42(3) and the curved flow paths 41(1) and 41(2) so that the cooling medium C1 is supplied firstly from the cooling medium supply port 21 to the circumferential flow path 42(1) and is discharged outside finally from the circumferential flow path 42(3) through the cooling medium discharge port 22.

The circumferential circulating flow path described above is set by performing Steps (b-1) and (b-2) described above in the ozone generation method for the first aspect, thus a flow rate of the cooling medium C1 flowing in the cooling medium flow path 4 is improved, and thermal conductivity of the cooling medium C1 can be kept relatively high, thus the effect of cooling the discharge space 6 by the cooling medium C1 can be improved.

### (Second aspect)

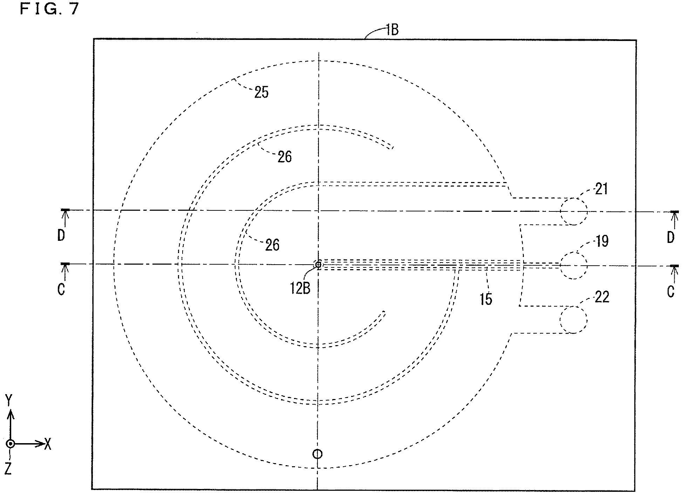

Fig. 7 is an explanation diagram schematically illustrating a planar structure of the cooling medium flow path 4 of a low voltage electrode 1B in the ozone generation apparatus as a second aspect of the embodiment 1. Fig. 7 illustrates an XYZ rectangular coordinate system.

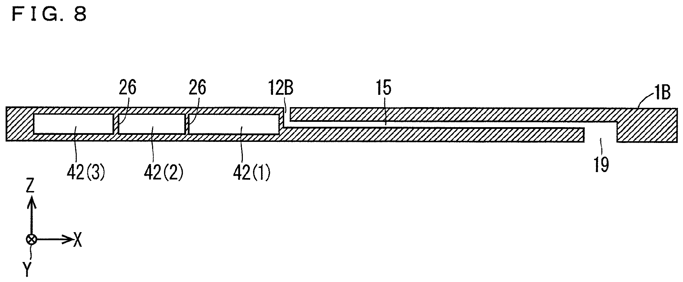

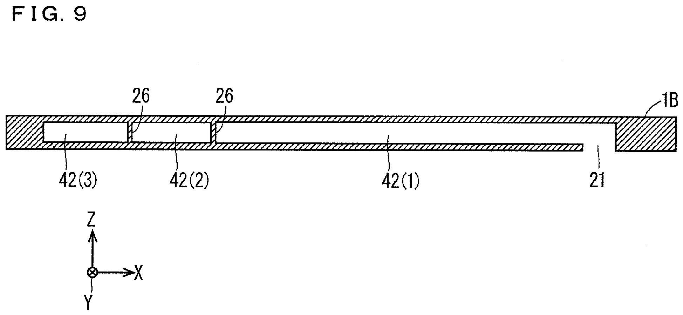

Fig. 8 and Fig. 9 are explanation diagrams each schematically illustrating a cross-sectional structure of the low voltage electrode 1B illustrated in Fig. 7. Fig. 8 illustrates a C-C cross section in Fig. 7, and Fig. 9 illustrates a D-D cross section in Fig. 7. Each of Fig. 8 and Fig. 9 illustrates an XYZ rectangular coordinate system. The second aspect of the embodiment 1 is described hereinafter with reference to Fig. 3 and Fig. 7 to Fig. 9. The second aspect indicates a specific structure of the low voltage electrode 1B corresponding to the low voltage electrode 1 in the electrode unit 61 as the basic configuration illustrated in Fig. 2.

An inner structure of the cooling medium flow path 4 formed in the low voltage electrode 1B is substantially the same as that of the cooling medium flow path 4 formed in the low voltage electrode 1A illustrated in Fig. 3.

The same sign is assigned to the configuration parts, for example, similar to those according to the embodiment 1 illustrated in Fig. 3 to Fig. 6 and the description is appropriately omitted. Characterizing portions of the second aspect are mainly described hereinafter.

As illustrated in Fig. 7 and Fig. 8, an ozone gas ejection port 19 is located in a lower surface of the low voltage electrode 1B. The gas flow outlet 12B does not pass through the low voltage electrode 1B, but is connected to an ozone gas path 15 in an intermediate region. The ozone gas path 15 is horizontally formed along an X direction, one end thereof on a side of a -X direction is connected to a lower end of the gas flow outlet 12B, and the other end thereof on a side of a +X direction is connected to an upper end of the ozone gas ejection port 19.

Accordingly, the ozone gas G2 obtained in the discharge space 6 is ejected outside from the ozone gas ejection port 19 through the gas flow outlet 12B and the ozone gas path 15.

In this manner, in the second aspect of the embodiment 1, the gas flow outlet 12B, the ozone gas path 15, and the ozone gas ejection port 19 are provided to correspond to the gas flow outlet 12 of the basic configuration illustrated in Fig. 2.

The ozone generation apparatus according to the second aspect of the embodiment 1 in the present disclosure achieves the circumferential circulating flow path structure in the manner similar to the first aspect. Thus, a flow rate of the cooling medium C1 flowing in the cooling medium flow path 4 is improved, and thermal conductivity of the cooling medium C1 can be kept relatively high, thus the effect of cooling the discharge space 6 by the cooling medium C1 can be improved.

### (Third aspect)

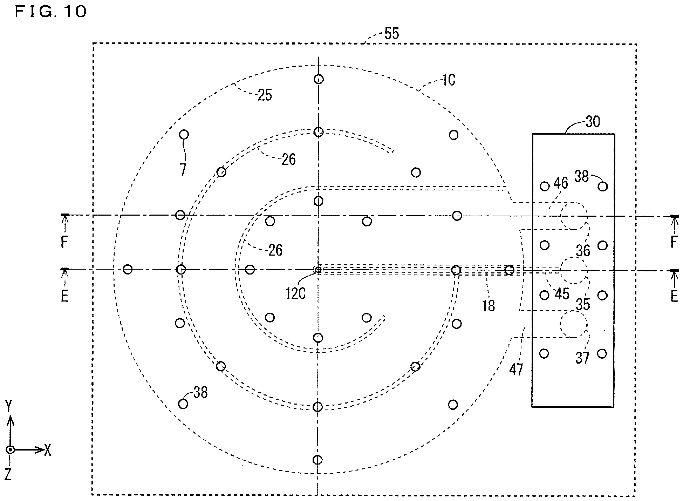

Fig. 10 is an explanation diagram schematically illustrating a planar structure of an ozone gas generation unit 55 including a low voltage electrode 1C in the ozone generation apparatus as a third aspect of the embodiment 1. Fig. 10 illustrates an XYZ rectangular coordinate system.

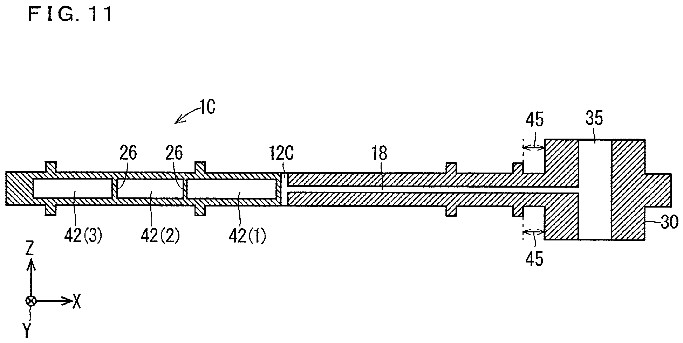

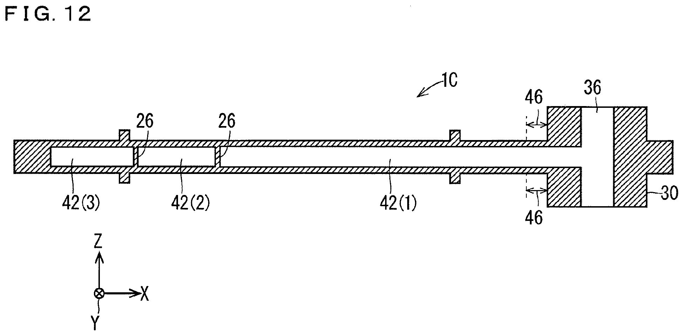

Fig. 11 and Fig. 12 are explanation diagrams each schematically illustrating a cross-sectional structure of the ozone gas generation unit 55 illustrated in Fig. 10. Fig. 11 illustrates an E-E cross section in Fig. 10, and Fig. 12 illustrates an F-F cross section in Fig. 10. Each of Fig. 11 and Fig. 12 illustrates an XYZ rectangular coordinate system. The third aspect of the embodiment 1 is described hereinafter with reference to Fig. 3 and Fig. 10 to Fig. 12. The third aspect indicates a specific structure of the ozone gas generation unit 55 including the low voltage electrode 1C corresponding to the low voltage electrode 1 in the electrode unit 61 as the basic configuration illustrated in Fig. 2.

The low voltage electrode 1C includes an ozone gas connection part 45, a cooling medium supply connection part 46, and a cooling medium discharge connection part 47 on a side of an ozone gas-cooling medium auxiliary member 30, and is connected to the ozone gas-cooling medium auxiliary member 30 via the ozone gas connection part 45, the cooling medium supply connection part 46, and the cooling medium discharge connection part 47. A plurality of bolt fixing holes 38 are provided in each of the low voltage electrode 1C and the ozone gas-cooling medium auxiliary member 30 illustrated in Fig. 10.

As illustrated in Fig. 10, a main part of the low voltage electrode 1C has a circular shape in an XY plane in a plan view. The main part of the low voltage electrode 1C indicates a part of the low voltage electrode 1C except for the ozone gas connection part 45, the cooling medium supply connection part 46, and the cooling medium discharge connection part 47.

In the third aspect of the embodiment 1, for example, the high voltage electrode 2 has a circular planar shape, thus the discharge space 6 has a circular shape in an XY plane in a plan view in the manner similar to the first and second aspects.

An inner structure of the cooling medium flow path 4 formed in the low voltage electrode 1C is substantially the same as that of the cooling medium flow path 4 formed in the low voltage electrode 1A illustrated in Fig. 3.

The same sign is assigned to the configuration parts, for example, similar to those according to the embodiment 1 illustrated in Fig. 3 to Fig. 6 or the embodiment 2 illustrated in Fig. 7 to Fig. 9, and the description is appropriately omitted. Characterizing portions of the third aspect are mainly described hereinafter.

As described above, the third aspect is made up of the ozone gas generation unit 55 including the low voltage electrode 1C and the ozone gas-cooling medium auxiliary member 30.

As illustrated in Fig. 10 and Fig. 12, the ozone gas-cooling medium auxiliary member 30 includes a cooling medium supply path 36, and the cooling medium supply path 36 is formed along a Z direction. This cooling medium supply path 36 doubles as a cooling medium supply port in the third aspect. As illustrated in Fig. 12, the circumferential flow path 42(1) and the cooling medium supply path 36 are connected in the cooling medium flow path 4 formed in the low voltage electrode 1C. In the third aspect, the circumferential flow path 42(1) is formed to extend in the cooling medium supply connection part 46 of the low voltage electrode 1C and the ozone gas-cooling medium auxiliary member 30.

The ozone gas-cooling medium auxiliary member 30 further includes a cooling medium discharge path 37, and the cooling medium discharge path 37 is also formed along the Z direction in the manner similar to the cooling medium supply path 36. This cooling medium discharge path 37 doubles as a cooling medium discharge port in the third aspect. The circumferential flow path 42(3) and the cooling medium discharge path 37 are connected in the cooling medium flow path 4 formed in the low voltage electrode 1C. In the third aspect, the circumferential flow path 42(3) is formed to extend in the cooling medium discharge connection part 47 of the low voltage electrode 1C and the ozone gas-cooling medium auxiliary member 30.

As illustrated in Fig. 10 and Fig. 11, the ozone gas-cooling medium auxiliary member 30 further includes an ozone gas path 35, and the ozone gas path 35 is also formed along the Z direction in the manner similar to the cooling medium supply path 36 and the cooling medium discharge path 37.

As illustrated in Fig. 11, the gas flow outlet 12C is provided to pass through the low voltage electrode 1C, and is connected to an ozone gas path 18 in an intermediate region. The ozone gas path 18 is horizontally formed along the X direction, one end thereof on the side of the -X direction is connected to an intermediate region of the gas flow outlet 12C, and the other end thereof on the side of the +X direction is connected to the ozone gas path 35.

In the third aspect, the ozone gas path 18 is formed to extend in the ozone gas connection part 45 of the low voltage electrode 1C and the ozone gas-cooling medium auxiliary member 30.

Accordingly, the ozone gas G2 obtained in the discharge space 6 flows to the ozone gas path 35 through the gas flow outlet 12C and the ozone gas path 18, and is ejected outside from an ozone output port (not shown) connected to the ozone gas path 35 provided to the ozone gas-cooling medium auxiliary member 30.

As illustrated in Fig. 10, the cooling medium supply path 36 as the cooling medium supply port and the cooling medium discharge path 37 as the cooling medium discharge port are disposed in positions so as not to be overlapped with the discharge space 6 in an XY plane in a plan view. Furthermore, the cooling medium supply path 36 and the cooling medium discharge path 37 are provided on the side of the +X direction in the same direction with respect to the discharge space 6 in a plan view.

In this manner, in the third aspect of the embodiment 1, the gas flow outlet 12C, the ozone gas path 18, the ozone gas path 35, and the ozone output port not shown in the diagrams are provided to correspond to the gas flow outlet 12 of the basic configuration illustrated in Fig. 2.

The gas flow outlet 12C is provided to pass through the low voltage electrode 1C based on an assumption of a case where the ozone gas generation unit 55 is made also on a side of the lower surface of the low voltage electrode 1C with a laminated structure of providing the electrode constituting part E2, and the discharge space 6 is formed on each of the side of the upper surface and the side of the lower surface of the low voltage electrode 1C.

The ozone generation apparatus according to the third aspect of the embodiment 1 in the present disclosure achieves the circumferential circulating flow path structure in the manner similar to the first and second aspects. Thus, a flow rate of the cooling medium C1 flowing in the cooling medium flow path 4 is improved, and thermal conductivity of the cooling medium C1 can be kept relatively high, thus the effect of cooling the discharge space 6 by the cooling medium C1 can be improved.

Furthermore, in the third aspect of the embodiment 1, the ozone gas-cooling medium auxiliary member 30 can performs processing of supplying and discharging the cooling medium C1 and ejecting the ozone gas G2.

The cooling medium supply path 36 and the cooling medium discharge path 37 are not overlapped with the discharge space 6 in a plan view in the ozone generation apparatus according to the third aspect of the embodiment 1. Thus, even when the ozone gas-cooling medium auxiliary member 30 including the cooling medium supply path 36 and the cooling medium discharge path 37 are provided, the discharge space 6 can be provided between the low voltage electrode 1C and the electrode constituting part E2 with no trouble.

Accordingly, the ozone generation apparatus according to the third aspect of the embodiment 1 can achieve the laminated structure by the plurality of electrode units 61 each including the low voltage electrode 1C, the high voltage electrode 2, and the dielectric body 3 relatively easily.

In the third aspect of the embodiment 1, the cooling medium supply path 36 doubling as the cooling medium supply port and the cooling medium discharge path 37 doubling as the cooling medium discharge port are provided in the same direction with respect to the discharge space 6 in a plan view, thus can be disposed close to each other, and the cooling medium C1 can be supplied to and discharged from outside relatively easily.

Furthermore, in the third aspect of the embodiment 1, the ozone gas-cooling medium auxiliary member 30 including the cooling medium supply path 36 and the cooling medium discharge path 37 is used as a dedicated member for supplying and discharging the cooling medium C1, thus the processing of supplying and discharging the cooling medium C1 can be performed with high accuracy.

### (Fourth aspect)

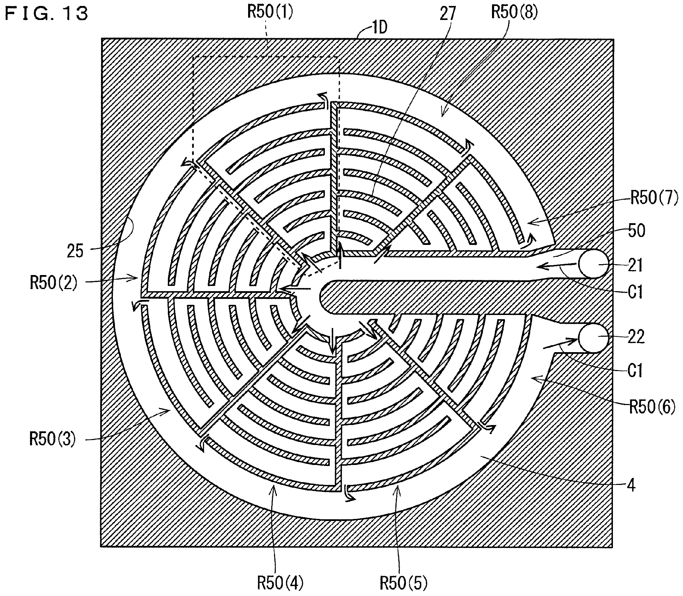

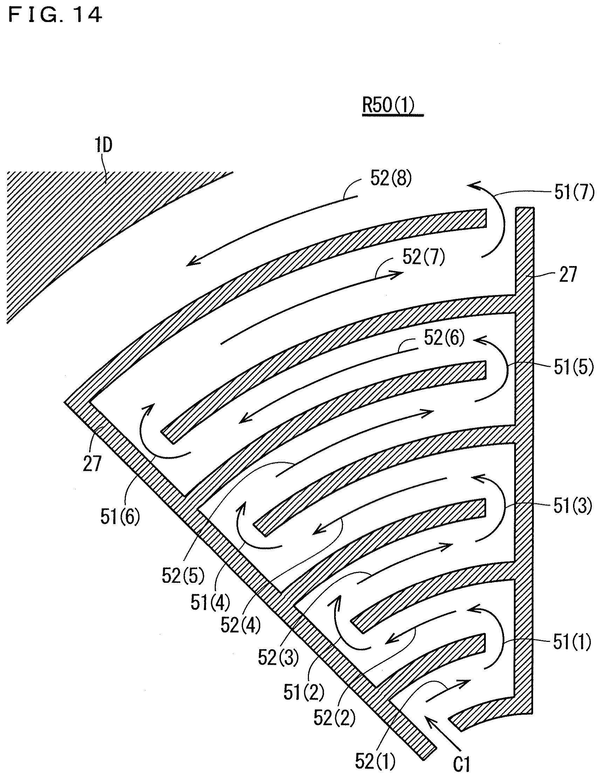

Fig. 13 is an explanation diagram schematically illustrating a planar structure of the cooling medium flow path 4 of a low voltage electrode 1D in the ozone generation apparatus as a fourth aspect of the embodiment 1. Fig. 14 is an explanation diagram schematically illustrating details of a branch refraction region R50(1) of the low voltage electrode 1D illustrated in Fig. 13. Each of Fig. 13 and Fig. 14 illustrates an XYZ rectangular coordinate system.

As illustrated in Fig. 13, the cooling medium flow path 4 according to the fourth aspect includes eight branch refraction regions R50(1) to R50(8). Illustration of the gas flow outlet provided to a center part of the low voltage electrode 1D is omitted in Fig. 13. Considered as a gas flow outlet according to the fourth aspect are the structures of the gas flow outlet 12, the gas flow outlet 12B, and the gas flow outlet 12C according to the first to third aspects.

The fourth aspect of the embodiment 1 is described hereinafter with reference to Fig. 13 and Fig. 14. The fourth aspect indicates a specific structure of the low voltage electrode 1D corresponding to the low voltage electrode 1 in the electrode unit 61 as the basic configuration illustrated in Fig. 2.

As illustrated in Fig. 13, the cooling medium supply port 21 and the cooling medium discharge port 22 are located in the lower surface of the low voltage electrode 1D in the manner similar to the first aspect. The cooling medium supply port 21 receives the cooling medium C1 from outside, and the cooling medium discharge port 22 discharges the cooling medium C1 outside.

In the low voltage electrode 1D according to the fourth aspect, the flow path outer wall 25 is provided along the outer periphery, and the flow path separation wall 27 is provided inside, thus the branch refraction regions R50(1) to R50(8) are provided. A partial cooling medium flow path is formed in each of the branch refraction regions R50(1) to R50(8). That is to say, the cooling medium flow path 4 formed in the low voltage electrode 1D includes eight partial cooling medium flow paths corresponding to the branch refraction regions R50(1) to R50(8).

The partial cooling medium flow path formed in each of the branch refraction regions R50(1) to R50(8) has a similar structure, thus the partial cooling medium flow path formed in the branch refraction region R50(1) illustrated in Fig. 14 is typically described hereinafter.

As illustrated in Fig. 14, provided in the branch refraction region R50(1) are branch refraction flow paths 51(1) to 51(7) changing a flow path direction and branch circumferential flow paths 52(1) to 52(8) each flowing the cooling medium C1 along the flow path direction. The branch refraction flow paths 51(1) to 51(7) correspond to at least one curved flow path, and the branch circumferential flow paths 52(1) to 52(8) correspond to a plurality of circumferential flow paths.

A pair of branch circumferential flow path 52(i) and branch circumferential flow path 52(i+1) (i = any of 1 to 7) adjacent to each other in the branch circumferential flow paths 52(1) to 52(8) are connected to each other so that flow path directions thereof are opposite to each other via the curved flow path 41(i).

That is to say, the pair of circumferential flow paths adjacent to each other in the plurality of circumferential flow paths (branch circumferential flow paths 52(1) to 52(8)) are connected so that the flow path directions thereof are opposite to each other via one curved flow path in at least one curved flow path (branch refraction flow paths 51(1) to 51(7)).

The branch circumferential flow path 52(1) of each of the branch refraction regions R50(1) to R50(8) is connected to the cooling medium supply port 21, and the flow path corresponding to the branch circumferential flow path 52(8) of each of the branch refraction regions R50(1) to R50(8) is connected to the cooling medium discharge port 22. Accordingly, the branch circumferential flow path 52(1) serves as a supply-side circumferential flow path, and the flow path corresponding to the branch circumferential flow path 52(8) serves as a discharge-side circumferential flow path.

The flow path corresponding to the branch circumferential flow path 52(8) indicates a branch circumferential flow path 52(k) (K is any of 2 to 8) farthest away from the gas flow outlet 12 in each of the branch refraction regions R50(1) to R50(8).

That is to say, the plurality of circumferential flow paths (the branch circumferential flow paths 52(1) to 52(8)) include the supply-side circumferential flow path (the branch circumferential flow path 52(1)) connected to the cooling medium supply port 21 and the discharge-side circumferential flow path (the flow path corresponding to the branch circumferential flow path 52(8)) connected to the cooling medium discharge port 22.

Then, the branch circumferential flow path 52(1) as the supply-side circumferential flow path is located closest to the gas flow outlet 12 and the flow path corresponding to the branch circumferential flow path 52(8) as the discharge-side circumferential flow path is located farthest away from the gas flow outlet 12 in the branch circumferential flow paths 52(1) to 52(8).

In this manner, the cooling medium flow path 4 provided in the low voltage electrode 1D has a branch supply form of being branched into the branch circumferential flow path 52(1) of each of the branch refraction regions R50(1) to R50(8) from the cooling medium supply port 21 to supply the cooling medium C1. Furthermore, the cooling medium flow path 4 has an interflow discharge form in which the cooling medium C1 joining from the flow path corresponding to the branch circumferential flow path 52(8) of each of the branch refraction regions R50(1) to R50(8) is discharged outside through the cooling medium discharge port 22. Accordingly, the cooling medium flow path 4 according to the fourth aspect achieves the circumferential circulating flow path structure of flowing the cooling medium C1 to the branch circumferential flow paths 52(1) to 62(8) and the branch refraction flow paths 51(1) to 51(7) in the branch supply form and the interflow discharge form described above.

That is to say, in the fourth aspect of the embodiment 1, the partial cooling medium flow path having the branch supply form and the interflow discharge form described above is provided to each of the branch refraction regions R50(1) to R50(8) as the center priority cooling medium flow path structure of the basic configuration, and the flow path width of the partial cooling medium flow path is set within a constant range.

In this manner, the plurality of partial cooling medium flow paths are provided to correspond to the branch refraction regions R50(1) to R50(8) as the cooling medium flow path 4 formed in the low voltage electrode 1D according to the fourth aspect of the embodiment 1.

Each of the plurality of partial cooling medium flow paths includes the branch circumferential flow paths 52(1) to 52(8) as the plurality of circumferential flow paths and the branch refraction flow paths 51(1) to 51(7) as at least one curved flow path.

The branch circumferential flow path 52(1) as the supply-side circumferential flow path of each of the plurality of partial cooling medium flow paths is connected to the cooling medium supply port 21, and the flow path corresponding to the branch circumferential flow path 52(8) as the discharge-side circumferential flow path of each of the plurality of partial cooling medium flow paths is connected to the cooling medium discharge port 22.

In this manner, in the fourth aspect of the embodiment 1, each of the plurality of partial cooling medium flow paths provided to correspond to the branch refraction regions R50(1) to R50(8) has the circumferential circulating flow path structure.

The ozone generation apparatus according to the fourth aspect of the embodiment 1 in the present disclosure achieves the circumferential circulating flow path structure in each of the branch refraction regions R50(1) to R50(8). Thus, a flow rate of the cooling medium C1 flowing in the cooling medium flow path 4 is improved, and thermal conductivity of the cooling medium C1 can be kept relatively high, thus the effect of cooling the discharge space 6 by the cooling medium C1 can be improved.

The cooling medium flow path 4 in the ozone generation apparatus according to the fourth aspect of the embodiment 1 includes the plurality of partial cooling medium flow paths. Then, achieved is the plurality of circumferential circulating flow path structures in which the flow path is parallelly branched to the branch circumferential flow path 52(1) of each of the plurality of partial cooling medium flow paths from the cooling medium supply port 21, and then the flow path corresponding to the branch circumferential flow path 52(8) of each of the plurality of partial cooling medium flow paths in a parallel relationship joins and is connected to the cooling medium discharge port 22. That is to say, the plurality of circumferential circulating flow path structures are achieved to correspond to the plurality of partial cooling medium flow paths.

In this manner, the fourth aspect of the embodiment 1 can achieve the plurality of circumferential circulating flow path structures as the center priority cooling medium flow path structures. In the meanwhile, the ozone gas G2 generated in the discharge space 6 has an ozone gas direction component directed to the gas flow outlet 12 from the whole circumference of the discharge space 6 through the discharge surrounding space S2 and the discharge center space S1 in a plan view.

Accordingly, a temperature distribution formed by the plurality of circumferential circulating flow path structures is a temperature distribution facing the ozone gas direction component described above with high accuracy, thus the discharge center space S1 can be set to be in a uniform low temperature state.

As a result, the ozone generation apparatus according to the fourth aspect of the embodiment 1 uniformly improve the effect of cooling the discharge center space S1 in the discharge space 6, thus can generate the ozone gas G2 having the higher concentration.

### (Test result)

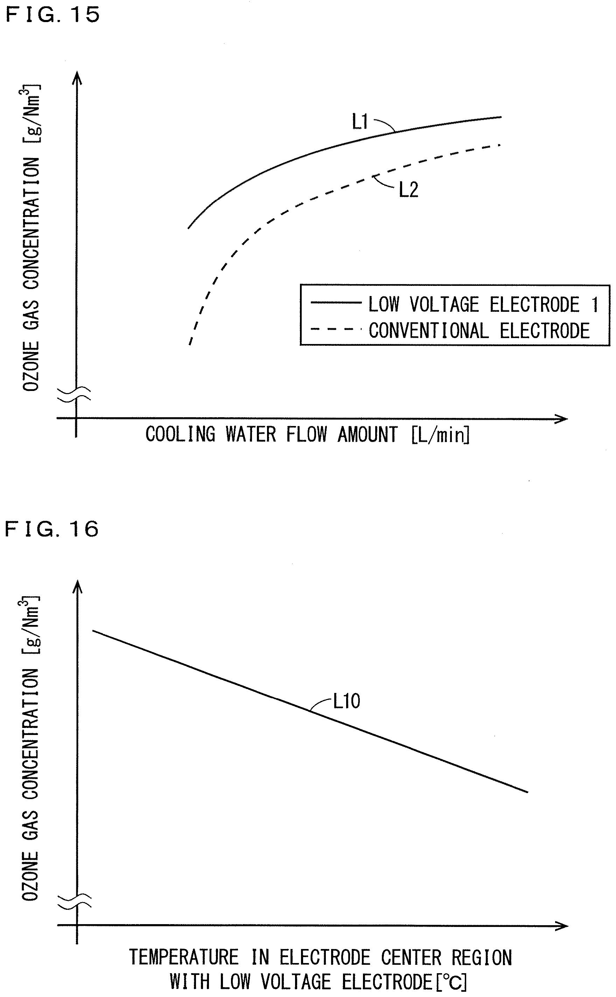

Fig. 15 is a graph illustrating a relationship between a flow amount [L/min] of cooling water as a flow amount of the cooling medium C1 and an ozone (gas) concentration [g/Nm³] of the ozone gas G2. In Fig. 15, a lateral axis indicates the flow amount of the cooling water and a vertical axis indicates the ozone concentration.

In Fig. 15, an ozone gas concentration variation line L1 is an ozone gas concentration variation line of the ozone generation apparatus according to the embodiment 1 including the low voltage electrode 1 (the low voltage electrodes 1A to 1D), and an ozone gas concentration variation line L2 is an ozone gas concentration variation line of the ozone generation apparatus having a conventional low voltage electrode typified by Patent Document 1.

As illustrated in Fig. 15, with regard to the ozone gas concentration variation line L1, the ozone gas G2 having a relatively high ozone concentration, which is hardly achieved in the ozone gas concentration variation line L2, can be generated with a small flow amount of the cooling water compared with the ozone gas concentration variation line L2.

Fig. 16 is a graph illustrating a relationship between a temperature [°C] of the electrode center region D1 in the low voltage electrode 1 (the low voltage electrodes 1A to 1D) and an ozone (gas) concentration of the ozone gas G2 according to the embodiment 1. In Fig. 16, a lateral axis indicates the temperature of the electrode center region D1 and a vertical axis indicates the ozone concentration.

Recognized from an ozone gas concentration variation line L10 illustrated in Fig. 16 is that the ozone concentration of the ozone gas G2 can be increased as the temperature of the electrode center region D1 gets lower.

It can be recognized from a test result illustrated in Fig. 15 and Fig. 16 that the ozone generation apparatus according to the embodiment 1 suppresses an amount (flow amount) of the cooling medium C1 (cooling water) to a bare minimum and generates the ozone gas G2 having a relatively high concentration.

Described in the first to fourth aspects of the embodiment 1 is a configuration that the cooling medium supply port 21 (the cooling medium supply path 36) and the cooling medium discharge port 22 (the cooling medium discharge path 37) are provided outside the discharge space 6 in a plan view; however, the other configuration is also certainly possible. For example, a cooling medium supply mechanism may be provided immediately below the cooling medium inlet 4a of the cooling medium flow path 4 provided on the side of the lower surface of the low voltage electrode 1 (1A to 1D). However, the cooling medium supply mechanism needs to be provided so as not to have influence on the ozone gas G2 outputted from the gas flow outlet 12.

### <Embodiment 2>

### (Basic configuration)

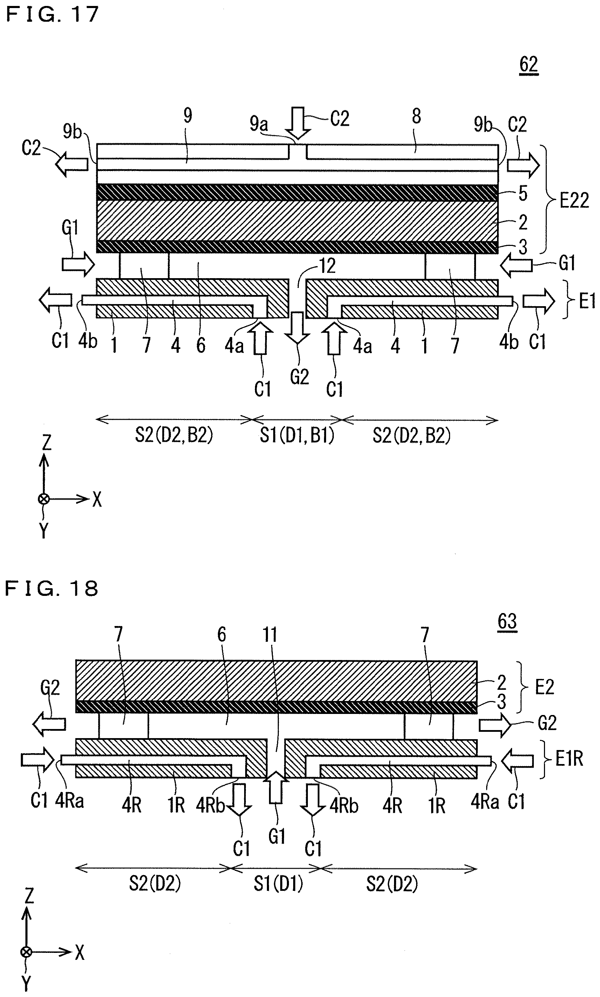

Fig. 17 is an explanation diagram schematically illustrating a cross-sectional structure of an electrode unit 62 as a basic configuration according to an embodiment 2 of the present disclosure. Fig. 17 illustrates an XYZ rectangular coordinate system. An ozone generation apparatus including the electrode unit 62 serves as an ozone generation apparatus according to the embodiment 2. As illustrated in Fig. 17, the electrode unit 62 includes electrode constituting parts E1 and E22 and the spacer 7 as main constituent elements.

The same sign as that in the embodiment 1 illustrated in Fig. 2 is assigned to constituting parts, for example, similar to those of the basic configuration according to the embodiment 1 hereinafter. The description thereof is appropriately omitted, and a characteristic part of the embodiment 2 is mainly described.

The electrode constituting part E22 is provided on the low voltage electrode 1 of the electrode constituting part E1 via the spacer 7. The electrode constituting part E22 includes the high voltage electrode 2, the dielectric body 3, an insulating structure 5, and a cooling plate 8 as main constituent elements. The dielectric body 3 is formed on the lower surface of the high voltage electrode 2.

The low voltage electrode 1 functions as the metal electrode with the built-in flow path including the cooling medium flow path 4 in the manner similar to the embodiment 1.

The insulating structure 5 is provided on the upper surface of the high voltage electrode 2 in the electrode constituting part E22. That is to say, the insulating structure 5 is provided adjacent to the high voltage electrode 2 as the second metal electrode on a side opposite to the discharge space 6.

Furthermore, the cooling plate 8 having a cooling function is provided on an upper surface of the insulating structure 5. That is to say, the cooling plate 8 is provided adjacent to the insulating structure 5 on a side opposite to the discharge space 6.

The cooling plate 8 includes therein a cooling medium flow path 9 as a second cooling medium flow path flowing a cooling medium C2 as a second cooling medium. The cooling plate 8 includes a cooling center region B1 overlapped with the discharge center space S1 in an XY plane in a plan view and a cooling surrounding region B2 overlapped with the discharge surrounding space S2 in an XY plane in a plan view.

The cooling medium flow path 9 provided in the cooling plate 8 includes a cooling medium inlet 9a in a center region on an upper surface of the cooling plate 8 and a cooling medium outlet 9b on a side of a side surface of the cooling plate 8, and is formed in a range from the cooling center region B1 to the cooling surrounding region B2. The cooling medium flow path 9 has a second center priority cooling medium flow path structure of flowing the cooling medium C2 from the cooling medium inlet 9a toward the cooling medium outlet 9b, thereby flowing the cooling medium C2 to the cooling center region B1 prior to the cooling surrounding region B2.

The ozone generation apparatus according to the embodiment 2 including the electrode unit 62 includes the cooling plate 8, thus can cool the discharge space 6 from a side of the low voltage electrode 1 by the low voltage electrode 1 including the cooling medium flow path 4 flowing the cooling medium C1 and can cool the discharge space 6 also from a side of the high voltage electrode 2 by the cooling plate 8.

As a result, the ozone generation apparatus according to the embodiment 2 can further improve the effect of cooling the discharge space 6.

Furthermore, the cooling plate 8 in the ozone generation apparatus according to the embodiment 2 has the second center priority cooling medium flow path structure described above, thus can keep the temperature of the cooling center region B1 near the gas flow outlet 12 from the side of the high voltage electrode 2 low.

As a result, the ozone generation apparatus according to the embodiment 2 can suppress a second amount of the cooling medium C2 as the second cooling medium to a bare minimum and generate the ozone gas G2 having a relatively high concentration.

Also in the embodiment 2, the structure and effect similar to those of the first to fourth aspects of the embodiment 1 can be achieved by extending the basic configuration illustrated in Fig. 17.

### <Embodiment 3>

### (Basic configuration)

Fig. 18 is an explanation diagram schematically illustrating a cross-sectional structure of an electrode unit 63 as a basic configuration according to an embodiment 3 of the present disclosure. Fig. 17 illustrates an XYZ rectangular coordinate system. An ozone generation apparatus including the electrode unit 63 serves as an ozone generation apparatus according to the embodiment 3. As illustrated in Fig. 18, the electrode unit 63 includes electrode constituting parts E1R and E2 and the spacer 7 as main constituent elements.

The same sign as that in the embodiment 1 illustrated in Fig. 2 is assigned to constituting parts, for example, similar to those of the basic configuration according to the embodiment 1 hereinafter. The description thereof is appropriately omitted, and a characteristic part of the embodiment 3 is mainly described.

The electrode constituting part E1R includes a low voltage electrode 1R as a main constituent element. The low voltage electrode 1R as a plate-like first metal electrode includes a gas supply port 11 passing through a center part of the low voltage electrode 1R as a gas supply port provided to the center part thereof.

The electrode constituting part E2 is provided on the low voltage electrode 1R of the electrode constituting part E1R via the spacer 7. The electrode constituting part E2 includes the high voltage electrode 2 and the dielectric body 3 as main constituent elements. The dielectric body 3 as an electrode dielectric body is formed on the lower surface of the high voltage electrode 2 as the plate-like second metal electrode.

In the embodiment 3, the dielectric body 3 as the electrode dielectric body is provided adjacent to the high voltage electrode 2, but may also be provided adjacent to the low voltage electrode 1R. That is to say, it is sufficient that at least one electrode dielectric body is provided adjacent to at least one of the low voltage electrode 1R and the high voltage electrode 2 between the low voltage electrode 1R and the high voltage electrode 2.

However, the discharge space 6 needs to be provided to have contact with at least one electrode dielectric body between the low voltage electrode 1R and the high voltage electrode 2. That is to say, when the electrode dielectric body is formed in the electrode constituting part E1R, the electrode dielectric body needs to be provided on an upper surface of the low voltage electrode 1R.

In the electrode unit 63 illustrated in Fig. 18, alternating-current voltage is applied between the low voltage electrode 1R and the high voltage electrode 2 in the manner similar to the electrode unit 61 according to the embodiment 1; thus, the dielectric barrier discharge can be generated in the discharge space 6.

The discharge space 6 includes the discharge center space S1 connected to the gas supply port 11 and the discharge surrounding space S2 around the discharge center space S1. An outer space connected to the discharge surrounding space S2 is an ozone gas output space. That is to say, a space connected to the discharge surrounding space S2 around the whole circumference of the discharge space 6 is an ozone gas output space.

As illustrated in Fig. 18, the material gas G1 is supplied from a lower side of the gas supply port 11 of the low voltage electrode 1R, and is supplied from the center of the discharge space 6 toward the whole circumference thereof. That is to say, the material gas G1 is supplied from the discharge center space S1 toward the discharge surrounding space S2. The material gas G1 passes through the discharge space 6 in which the dielectric barrier discharge is generated; thus, the ozone gas G2 is obtained.

The ozone gas G2 obtained in the discharge space 6 is outputted to the outer ozone gas output space through the discharge surrounding space S2.

The low voltage electrode 1R functions as the metal electrode with the built-in flow path, and includes a cooling medium flow path 4R flowing the cooling medium C1 inside. The low voltage electrode 1R functioning as the metal electrode with the built-in flow path includes the electrode center region D1 overlapped with the discharge center space S1 in an XY plane in a plan view and the electrode surrounding region D2 overlapped with the discharge surrounding space S2 in an XY plane in a plan view.

The cooling medium flow path 4R provided in the low voltage electrode 1R includes a cooling medium inlet 4Ra on a side of the side surface of the low voltage electrode 1 and a cooling medium outlet 4Rb in a center region in the lower surface of the low voltage electrode 1, and is formed in a range from the electrode surrounding region D2 to the electrode center region D1. Then, the cooling medium flow path 4R provided in the low voltage electrode 1R has a surrounding priority cooling medium flow path structure of flowing the cooling medium C1 from the cooling medium inlet 4Ra to the cooling medium outlet 4Rb, thereby flowing the cooling medium C1 to the electrode surrounding region D2 prior to the electrode center region D1.

In the ozone generation apparatus including the electrode unit 63 as the basic configuration of the embodiment 3 of the present disclosure, the cooling medium flow path 4 provided to the low voltage electrode 1R functioning as the metal electrode with the built-in flow path has the surrounding priority cooling medium flow path structure described above, thus a temperature in the electrode surrounding region D2 near the ozone gas output space can be kept relatively low.

In the meanwhile, the material gas G1 is supplied from the discharge center space S1 toward the discharge surrounding space S2, thus with regard to the ozone gas G2 generated in the discharge space 6, an ozone concentration in the discharge surrounding space S2 tends to be higher than that in the discharge center space S1.

Accordingly, in the ozone generation apparatus as the basic configuration of the embodiment 3, the cooling medium flow path 4R provided to the low voltage electrode 1R has the surrounding priority cooling medium flow path structure described above to improve the effect of cooling the discharge surrounding space S2, thereby being able to reduce the temperature of the discharge surrounding space S2 and suppress a phenomenon of resolution of the ozone gas G2 in the high ozone concentration state to a bare minimum.

As a result, the ozone generation apparatus as the basic configuration of the embodiment 3 can suppress the amount of the cooling medium C1 to a bare minimum and generate the ozone gas G2 having a relatively high concentration.

In the electrode unit 63 illustrated in Fig. 18, the low voltage electrode 1R functions as the metal electrode with the built-in flow path in the low voltage electrode 1R and the high voltage electrode 2, however, it is sufficient that at least one of the low voltage electrode 1R and the high voltage electrode 2 functions as the metal electrode with the built-in flow path.

For example, it is also applicable that the high voltage electrode 2 functions as the metal electrode with the built-in flow path and a cooling medium flow path corresponding to the cooling medium flow path 4R is provided in the high voltage electrode 2. However, the cooling medium flowing in the cooling medium flow path in the high voltage electrode 2 needs to have insulation properties.

### (Ozone generation method)

An ozone generation method using the ozone generation apparatus as the basic configuration of the embodiment 3 in Fig. 18 (hereinafter abbreviated as "the ozone generation method for the basic configuration" in the embodiment 3 and the embodiment 4 in some cases) includes the following Steps (a) to (c).

Step (a): Alternating-current voltage is applied between the low voltage electrode 1R as the first metal electrode and the high voltage electrode 2 as the second metal electrode to generate the dielectric barrier discharge in the discharge space 6.

Step (b): The cooling medium C1 flows from the cooling medium inlet 4Ra to the cooling medium outlet 4Rb in the cooling medium flow path 4R in the low voltage electrode 1R to perform surrounding priority cooling medium flow path setting processing of flowing the cooling medium C1 in the electrode surrounding region D2 prior to the electrode center region D1.

Step (c): The material gas G1 is supplied from the gas supply port 11 toward the discharge surrounding space S2 through the discharge center space S1 to obtain the ozone gas G2 in the discharge space 6.

The ozone gas G2 obtained in the discharge space 6 is outputted to the outer ozone gas output space from the whole circumference of the discharge surrounding space S2 through the discharge surrounding space S2 by performing Steps (a) to (c) described above.

In the ozone generation method for the basic configuration, the surrounding priority cooling medium flow path setting processing is performed by Step (b) described above, thus the temperature of the discharge surrounding space S2 can be kept relatively low. In the meanwhile, with regard to the ozone gas G2 generated in the discharge space 6, the ozone concentration in the discharge surrounding space S2 tends to be higher than that in the discharge center space S1.

Accordingly, the ozone generation method for the basic configuration performs Step (b) and improves the effect of cooling the discharge surrounding space S2, thereby being able to suppress the amount of the cooling medium C1 to a bare minimum and generate the ozone gas G2 having a relatively high concentration.

### (First aspect)

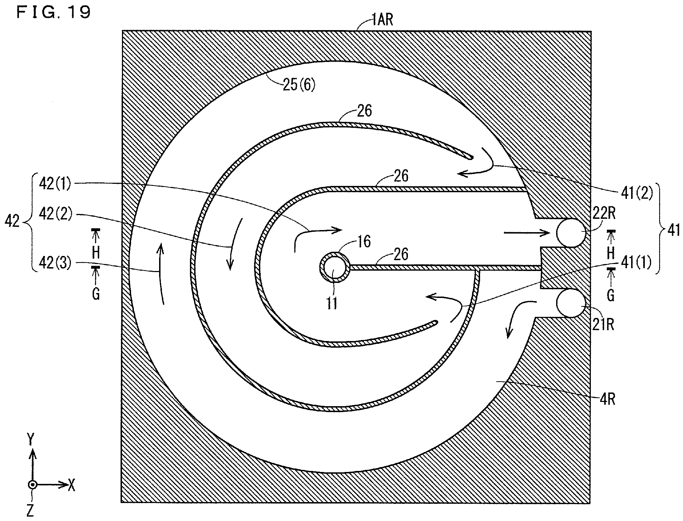

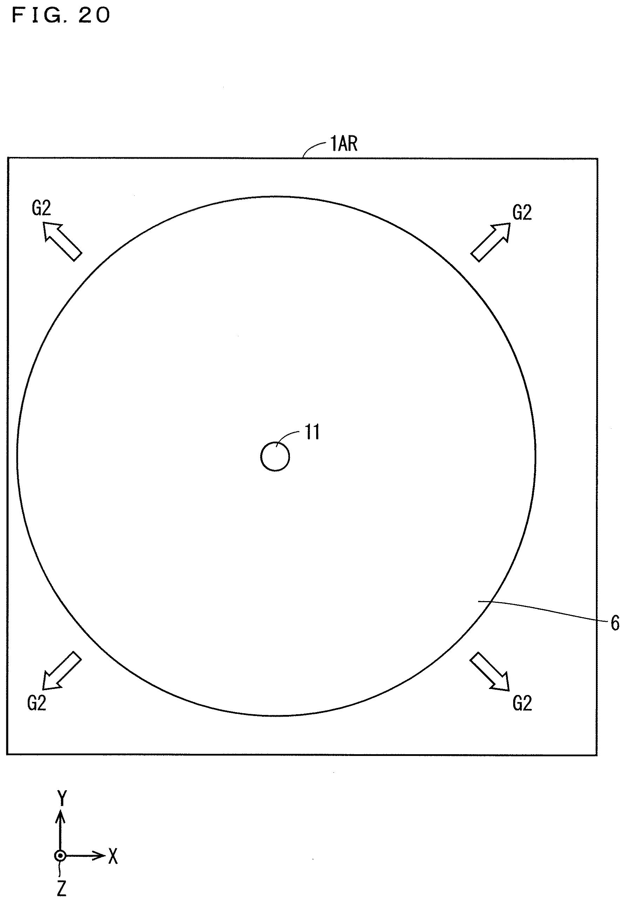

Fig. 19 is an explanation diagram schematically illustrating a planar structure of the cooling medium flow path 4R of a low voltage electrode 1AR in an ozone generation apparatus as a first aspect of the embodiment 3. Fig. 20 is an explanation diagram schematically illustrating the discharge space 6 on the low voltage electrode 1AR illustrated in Fig. 19. Each of Fig. 19 and Fig. 20 illustrates an XYZ rectangular coordinate system.

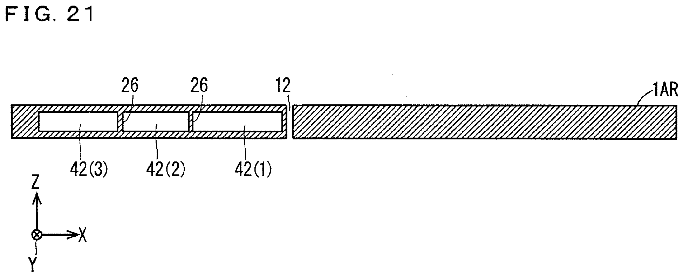

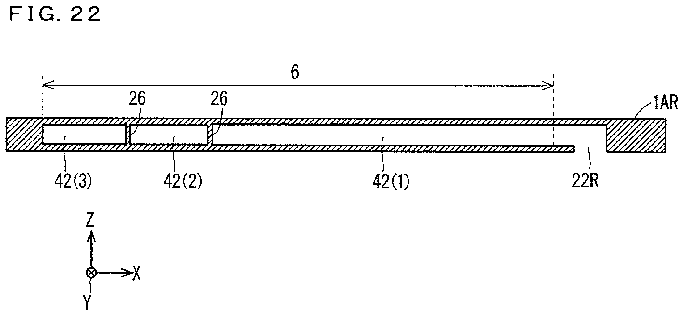

Fig. 21 and Fig. 22 are explanation diagrams each schematically illustrating a cross-sectional structure of the low voltage electrode 1AR illustrated in Fig. 19. Fig. 21 illustrates a G-G cross section in Fig. 19, and Fig. 22 illustrates an H-H cross section in Fig. 19. Each of Fig. 21 and Fig. 22 illustrates an XYZ rectangular coordinate system. The first aspect of the embodiment 3 is described hereinafter with reference to Fig. 19 to Fig. 22. The first aspect indicates a specific structure of the low voltage electrode 1AR corresponding to the low voltage electrode 1R in the electrode unit 63 as the basic configuration illustrated in Fig. 18.

As illustrated in Fig. 19 and Fig. 20, the low voltage electrode 1AR has a rectangular shape in an XY plane in a plan view. In the meanwhile, as illustrated in Fig. 20, the discharge space 6 has a circular shape in an XY plane in a plan view. For example, when the high voltage electrode 2 has a circular planar shape, the discharge space 6 formed between the low voltage electrode 1AR and the high voltage electrode 2 can have a circular shape.

As illustrated in Fig. 19 and Fig. 22, a cooling medium supply port 21R and a cooling medium discharge port 22R are located in a lower surface of the low voltage electrode 1AR. The cooling medium discharge port 22R discharges the cooling medium C1 from the circumferential flow path 42(1), and the cooling medium supply port 21R supplies the cooling medium C1 to the circumferential flow path 42(3) in the low voltage electrode 1AR. The cooling medium supply port 21R also has a cross-sectional structure similar to the cooling medium discharge port 22R illustrated in Fig. 22.

In the low voltage electrode 1AR of the first aspect, the flow path outer wall 25 is provided along an outer periphery, and the flow path separation wall 26 is provided inside; thus, the cooling medium flow path 4R includes curved flow paths 41(1) and 41(2) changing the flow path direction and circumferential flow paths 42(1) to 42(3) each flowing the cooling medium C1 along the flow path direction. That is to say, in the first aspect of the embodiment 3, the curved flow paths 41(1) and 41(2) constitute at least one curved flow path, and the circumferential flow paths 42(1) to 42(3) constitute a plurality of circumferential flow paths in the manner similar to the first aspect of the embodiment 1.

As illustrated in Fig. 19 and Fig. 22, the cooling medium supply port 21R and the cooling medium discharge port 22R are disposed in positions so as not to be overlapped with the discharge space 6 in an XY plane in a plan view. Furthermore, the cooling medium supply port 21R and the cooling medium discharge port 22R are provided on the side of the +X direction in the same direction with respect to the discharge space 6 in a plan view.

The gas supply port 11 blocked from the cooling medium C1 flowing in the cooling medium flow path 4R is provided to the cooling medium flow path 4R by the gas flow outlet wall 16.

A pair of circumferential flow path 42(i+1) and a circumferential flow path 42(i) (i = any of 2 and 1) in the circumferential flow paths 42(1) to 42(3) are connected to each other so that flow path directions thereof are opposite to each other via the curved flow path 41(i).

That is to say, the pair of circumferential flow paths adjacent to each other in the plurality of circumferential flow paths (circumferential flow paths 42(1) to 42(3)) are connected so that the flow path directions thereof are opposite to each other via one curved flow path in at least one curved flow path (curved flow paths 41(1) and 41(2)).

The circumferential flow path 42(1) is connected to the cooling medium discharge port 22R, and the circumferential flow path 42(3) is connected to the cooling medium supply port 21R. Accordingly, the circumferential flow path 42(1) serves as a discharge-side circumferential flow path, and the circumferential flow path 42(3) serves as a supply-side circumferential flow path.

That is to say, the plurality of circumferential flow paths (the circumferential flow paths 42(1) to 42(3)) include the supply-side circumferential flow path (the circumferential flow path 42(3)) connected to the cooling medium supply port 21R and the discharge-side circumferential flow path (the circumferential flow path 42(1)) connected to the cooling medium discharge port 22R.

Then, the circumferential flow path 42(3) as the supply-side circumferential flow path is located farthest away from the gas supply port 11 and the circumferential flow path 42(1) as the discharge-side circumferential flow path is located closest to the gas supply port 11 in the circumferential flow paths 42(1) to 42(3).

In this manner, the cooling medium flow path 4R provided in the low voltage electrode 1AR achieves a circumferential circulating flow path structure of flowing the cooling medium C1 to the circumferential flow paths 42(1) to 42(3) and the curved flow paths 41(1) and 41(2) so that the cooling medium C1 is supplied firstly from the cooling medium supply port 21R to the circumferential flow path 42(3) and is discharged outside finally from the circumferential flow path 42(2) through the cooling medium discharge port 22R.

That is to say, in the first aspect of the embodiment 3, the circumferential circulating flow path structure is achieved as the surrounding priority cooling medium flow path structure of the basic configuration, and a flow path width of each of the circumferential flow paths 42(1) to 42(3) and the curved flow paths 41(1) and 41(2) is set within a constant range.

The ozone generation apparatus according to the first aspect of the embodiment 3 in the present disclosure achieves the circumferential circulating flow path structure described above as the surrounding priority cooling medium flow path structure. Thus, a flow rate of the cooling medium C1 flowing in the cooling medium flow path 4R is improved by setting the flow path width within the constant range and thermal conductivity of the cooling medium C1 can be kept relatively high; thus, the effect of cooling the discharge space 6 by the cooling medium C1 can be improved.

The cooling medium supply port 21R and the cooling medium discharge port 22R are not overlapped with the discharge space 6 in a plan view in the ozone generation apparatus according to the first aspect of the embodiment 3. Thus, even when the cooling medium supply port 21R and the cooling medium discharge port 22R are provided, the discharge space 6 can be provided between the low voltage electrode 1AR and the electrode constituting part E2 with no trouble.

In the first aspect of the embodiment 3, the cooling medium supply port 21R and the cooling medium discharge port 22R are provided in the same direction with respect to the discharge space 6 in a plan view, thus can be disposed close to each other, and the cooling medium C1 can be supplied to and discharged from outside relatively easily.

In the first aspect of the embodiment 3, the discharge space 6 has the circular shape in a plan view, thus the ozone gas G2 can be uniformly outputted from the whole circumference of the discharge space 6 to the outer ozone gas output space.

### (Ozone generation method)

The ozone generation method using the ozone generation apparatus as the first aspect of the embodiment 3 illustrated in Fig. 19 to Fig. 22 includes the following Steps (b-1) and (b-2) as the surrounding priority cooling medium flow path setting processing described above in Step (b) performed in the ozone generation method for the basic configuration.

Step (b-1): The cooling medium C1 is supplied to the circumferential flow path 42(3) as the supply-side circumferential flow path from the cooling medium supply port 21R.

Step (b-2): The cooling medium C1 is discharged to the cooling medium discharge port 22R from the circumferential flow path 42(1) as the discharge-side circumferential flow path.

When Steps (b-1) and (b-2) described above are performed, set in the cooling medium flow path 4R is the circumferential circulating flow path in which the cooling medium C1 flows in the circumferential flow paths 42(1) to 42(3) and the curved flow paths 41(1) and 41(2) so that the cooling medium C1 is supplied firstly from the cooling medium supply port 21R to the circumferential flow path 42(3) and is discharged outside finally from the circumferential flow path 42(1) through the cooling medium discharge port 22R.

The circumferential circulating flow path described above is set by performing Steps (b-1) and (b-2) described above in the ozone generation method for the first aspect, thus a flow rate of the cooling medium C1 flowing in the cooling medium flow path 4R is improved, and thermal conductivity of the cooling medium C1 can be kept relatively high; thus, the effect of cooling the discharge space 6 by the cooling medium C1 can be improved.

### (Second aspect)

Also in the embodiment 3, the structure similar to that of the second aspect of the embodiment 1 illustrated in Fig. 7 to Fig. 9 can be achieved. The embodiment 3 has the effect similar to the second aspect of the embodiment 1. In this case, the gas supply port, the material gas intake port, the cooling medium discharge port 22R, and the cooling medium supply port 21R according to the second aspect of the embodiment 3 correspond to the gas flow outlet 12B, the ozone gas ejection port 19, the cooling medium supply port 21, and the cooling medium discharge port 22 according to the second aspect of the embodiment 1, respectively.

### (Third aspect)

Also in the embodiment 3, the structure similar to that of the third aspect of the embodiment 1 illustrated in Fig. 10 to Fig. 12 can be achieved. The embodiment 3 has the effect similar to the third aspect of the embodiment 1. In this case, the gas supply port, the material gas path, the cooling medium discharge port, and the cooling medium supply port according to the third aspect of the embodiment 3 correspond to the gas flow outlet 12C, the ozone gas path 35, the cooling medium supply path 36, and the cooling medium discharge path 37 according to the third aspect of the embodiment 1, respectively.

### (Fourth aspect)

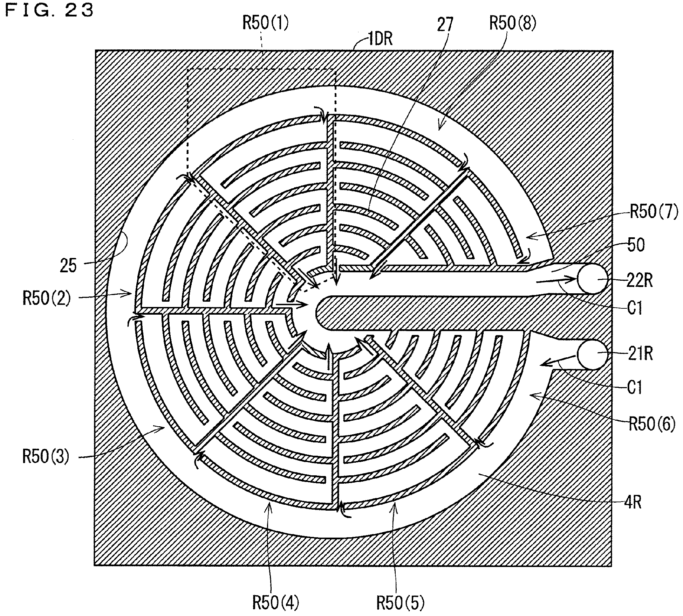

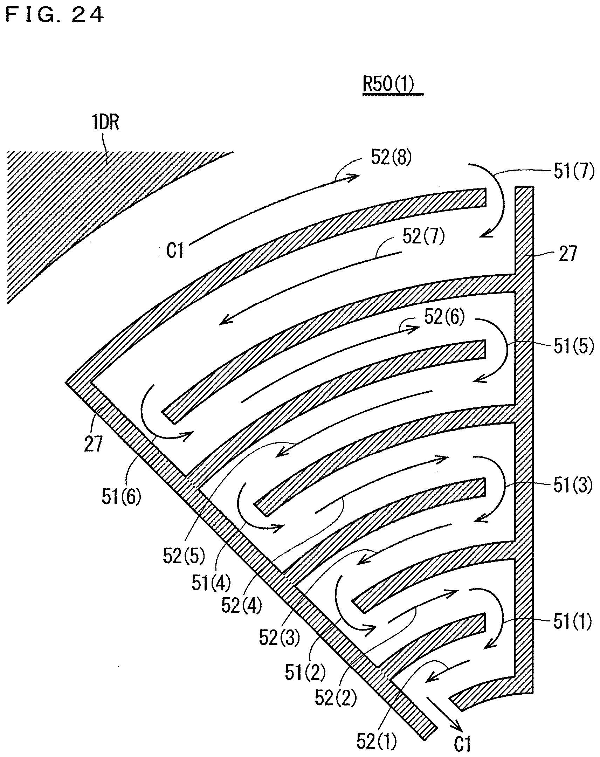

Fig. 23 is an explanation diagram schematically illustrating a planar structure of the cooling medium flow path 4R of a low voltage electrode 1DR in an ozone generation apparatus as a fourth aspect of the embodiment 3. Fig. 24 is an explanation diagram schematically illustrating details of a branch refraction region R50(1) of the low voltage electrode 1DR illustrated in Fig. 23. Each of Fig. 23 and Fig. 24 illustrates an XYZ rectangular coordinate system.

As illustrated in Fig. 23, the cooling medium flow path 4R according to the fourth aspect includes eight branch refraction regions R50(1) to R50(8). Illustration of the gas supply port provided to a center part of the low voltage electrode 1DR is omitted in Fig. 23. A structure of the gas supply port 11 according to the first aspect, for example, is considered as the gas supply port according to the fourth aspect.

The fourth aspect of the embodiment 3 is described hereinafter with reference to Fig. 23 and Fig. 24. The fourth aspect indicates a specific structure of the low voltage electrode 1DR corresponding to the low voltage electrode 1R in the electrode unit 63 as the basic configuration illustrated in Fig. 18.

As illustrated in Fig. 23, the cooling medium supply port 21R and the cooling medium discharge port 22R are located in the lower surface of the low voltage electrode 1DR in the manner similar to the first aspect. The cooling medium supply port 21R receives the cooling medium C1 from outside, and the cooling medium discharge port 22R discharges the cooling medium C1 outside.

In the low voltage electrode 1DR according to the fourth aspect, the flow path outer wall 25 is provided along the outer periphery, and the flow path separation wall 27 is provided inside, thus the branch refraction regions R50(1) to R50(8) are provided. A partial cooling medium flow path is formed in each of the branch refraction regions R50(1) to R50(8). That is to say, the cooling medium flow path 4R formed in the low voltage electrode 1DR includes eight partial cooling medium flow paths corresponding to the branch refraction regions R50(1) to R50(8).

The partial cooling medium flow path formed in each of the branch refraction regions R50(1) to R50(8) has a similar structure, thus the partial cooling medium flow path formed in the branch refraction region R50(1) illustrated in Fig. 24 is typically described hereinafter.

Provided in the branch refraction region R50(1) are branch refraction flow paths 51(1) to 51(7) changing a flow path direction and branch circumferential flow paths 52(1) to 52(8) each flowing the cooling medium C1 along the flow path direction. That is to say, in the manner similar to the fourth aspect of the embodiment 1, the branch refraction flow paths 51(1) to 51(7) correspond to at least one curved flow path, and the branch circumferential flow paths 52(1) to 52(8) correspond to a plurality of circumferential flow paths in the fourth aspect of the embodiment 3.

A pair of branch circumferential flow path 52(i+1) and branch circumferential flow path 52(i) (i = any of 7 to 1) adjacent to each other in the branch circumferential flow paths 52(1) to 52(8) are connected to each other so that flow path directions thereof are opposite to each other via the curved flow path 41(i).

That is to say, the pair of circumferential flow paths adjacent to each other in the plurality of circumferential flow paths (branch circumferential flow paths 52(1) to 52(8)) are connected so that the flow path directions thereof are opposite to each other via one curved flow path in at least one curved flow path (branch refraction flow paths 51(1) to 51(7)).

The flow path corresponding to the branch circumferential flow path 52(8) of each of the branch refraction regions R50(1) to R50(8) is connected to the cooling medium supply port 21R, and the branch circumferential flow path 52(1) of each of the branch refraction regions R50(1) to R50(8) is connected to the cooling medium discharge port 22R. Accordingly, the flow path corresponding to the branch circumferential flow path 52(8) serves as a supply-side circumferential flow path, and the branch circumferential flow path 52(1) serves as a discharge-side circumferential flow path.

That is to say, the plurality of circumferential flow paths (the branch circumferential flow paths 52(1) to 52(8)) include the supply-side circumferential flow path (the flow path corresponding to the branch circumferential flow path 52(8)) connected to the cooling medium supply port 21R and the discharge-side circumferential flow path (the branch circumferential flow path 52(1)) connected to the cooling medium discharge port 22R.

Then, the flow path corresponding to the branch circumferential flow path 52(8) as the supply-side circumferential flow path is located farthest away from the gas supply port 11 and the branch circumferential flow path 52(1) as the discharge-side circumferential flow path is located closest to the gas supply port 11 in the branch circumferential flow paths 52(1) to 52(8).

In this manner, the cooling medium flow path 4R provided in the low voltage electrode 1DR has a branch supply form of being branched into the flow path corresponding to the branch circumferential flow path 52(8) of each of the branch refraction regions R50(1) to R50(8) from the cooling medium supply port 21R to supply the cooling medium C1. Furthermore, the cooling medium flow path 4R has an interflow discharge form in which the cooling medium C1 joining from the branch circumferential flow path 52(1) of each of the branch refraction regions R50(1) to R50(8) is discharged outside through the cooling medium discharge port 22R. Accordingly, the cooling medium flow path 4R according to the fourth aspect achieves the circumferential circulating flow path structure of flowing the cooling medium C1 to the branch circumferential flow paths 52(1) to 52(8) and the branch refraction flow paths 51(1) to 51(7) in the branch supply form and the interflow discharge form described above.

That is to say, in the fourth aspect of the embodiment 3, the partial cooling medium flow path having the branch supply form and the interflow discharge form described above is provided to each of the branch refraction regions R50(1) to R50(8) as the surrounding priority cooling medium flow path structure of the basic configuration, and the flow path width of the partial cooling medium flow path is set within a constant range.

In this manner, the plurality of partial cooling medium flow paths are provided to correspond to the branch refraction regions R50(1) to R50(8) as the cooling medium flow path 4R formed in the low voltage electrode 1DR according to the fourth aspect of the embodiment 3.

Each of the plurality of partial cooling medium flow paths includes the branch circumferential flow paths 52(1) to 52(8) as the plurality of circumferential flow paths and the branch refraction flow paths 51(1) to 51(7) as at least one curved flow path.

The flow path corresponding to the branch circumferential flow path 52(8) as the supply-side circumferential flow path of each of the plurality of partial cooling medium flow paths is connected to the cooling medium supply port 21R, and the branch circumferential flow path 52(1) as the discharge-side circumferential flow path of each of the plurality of partial cooling medium flow paths is connected to the cooling medium discharge port 22R.

In this manner, in the fourth aspect of the embodiment 3, each of the plurality of partial cooling medium flow paths provided to correspond to the branch refraction regions R50(1) to R50(8) has the circumferential circulating flow path structure.

The ozone generation apparatus according to the fourth aspect of the embodiment 3 in the present disclosure achieves the circumferential circulating flow path structure in each of the branch refraction regions R50(1) to R50(8). Thus, a flow rate of the cooling medium C1 flowing in the cooling medium flow path 4R is improved, and thermal conductivity of the cooling medium C1 can be kept relatively high; thus, the effect of cooling the discharge space 6 by the cooling medium C1 can be improved.

The cooling medium flow path in the ozone generation apparatus according to the fourth aspect of the embodiment 3 includes the plurality of partial cooling medium flow paths. Thus, achieved is the plurality of circumferential circulating flow path structures in which the flow path is parallelly branched to the flow path corresponding to the branch circumferential flow path 52(8) of each of the plurality of partial cooling medium flow paths from the cooling medium supply port 21R, and then the branch circumferential flow path 52(1) of each of the plurality of partial cooling medium flow paths in a parallel relationship joins and is connected to the cooling medium discharge port 22R. That is to say, the plurality of circumferential circulating flow path structures are achieved to correspond to the plurality of partial cooling medium flow paths.

In this manner, the fourth aspect of the embodiment 3 can achieve the plurality of circumferential circulating flow path structures as the surrounding priority cooling medium flow path structures. In the meanwhile, the ozone gas G2 generated in the discharge space 6 has an ozone gas direction component directed to the whole circumference of the discharge space 6 from the gas supply port 11 through the discharge center space S1 and the discharge surrounding space S2.

Accordingly, a temperature distribution formed by the plurality of circumferential circulating flow path structures is a temperature distribution facing the ozone gas direction component described above with high accuracy, thus the discharge surrounding space S2 can be set to be in a uniform low temperature state.

As a result, the ozone generation apparatus according to the fourth aspect of the embodiment 3 uniformly improve the effect of cooling the discharge surrounding space S2 in the discharge space 6, thus can generate the ozone gas G2 having the higher concentration.

Described in the first to fourth aspects of the embodiment 3 is a configuration that the cooling medium supply port 21R and the cooling medium discharge port 22R are provided outside the discharge space 6 in a plan view, however, the other configuration is also certainly possible. For example, a cooling medium discharge mechanism may be provided immediately below the cooling medium outlet 4Rb of the cooling medium flow path 4R provided on the side of the lower surface of the low voltage electrode 1R (1AR to 1DR). However, the cooling medium discharge mechanism needs to be provided so as not to have influence on the material gas G1 supplied from the gas supply port 11.

### <Embodiment 4>

### (Basic configuration)

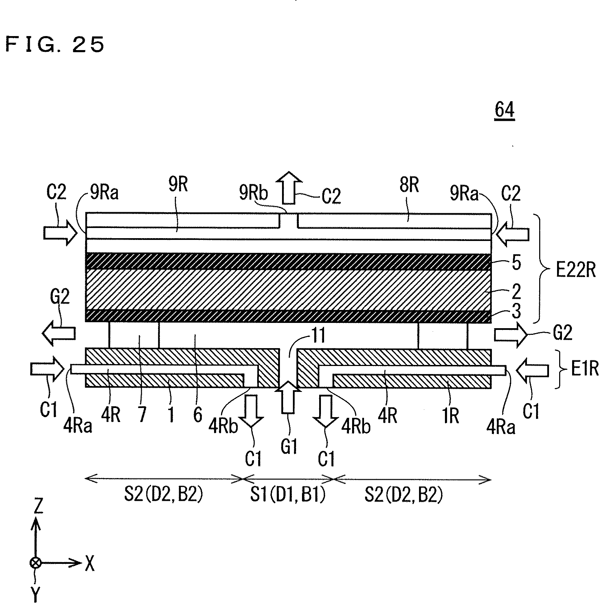

Fig. 25 is an explanation diagram schematically illustrating a cross-sectional structure of an electrode unit 64 as a basic configuration according to an embodiment 4 of the present disclosure. Fig. 25 illustrates an XYZ rectangular coordinate system. An ozone generation apparatus including the electrode unit 64 serves as an ozone generation apparatus according to the embodiment 4. As illustrated in Fig. 25, the electrode unit 64 includes electrode constituting parts E1R and E22R and the spacer 7 as main constituent elements.

The same sign as that in the embodiment 3 illustrated in Fig. 18 is assigned to constituting parts, for example, similar to those of the basic configuration according to the embodiment 3 hereinafter. The description thereof is appropriately omitted, and a characteristic part of the embodiment 4 is mainly described.

The electrode constituting part E22R is provided on the low voltage electrode 1R of the electrode constituting part E1R via the spacer 7. The electrode constituting part E22R includes the high voltage electrode 2, the dielectric body 3, the insulating structure 5, and a cooling plate 8R as main constituent elements. The dielectric body 3 is formed on the lower surface of the high voltage electrode 2.

The low voltage electrode 1R functions as the metal electrode with the built-in flow path including the cooling medium flow path 4 in the manner similar to the embodiment 3.

The insulating structure 5 is provided on the upper surface of the high voltage electrode 2 in the electrode constituting part E22R. That is to say, the insulating structure 5 is provided adjacent to the high voltage electrode 2 as the second metal electrode on a side opposite to the discharge space 6.

Furthermore, the cooling plate 8R having a cooling function is provided on the upper surface of the insulating structure 5. That is to say, the cooling plate 8R is provided adjacent to the insulating structure 5 on a side opposite to the discharge space 6.

The cooling plate 8R includes therein a cooling medium flow path 9R as a second cooling medium flow path flowing the cooling medium C2 as the second cooling medium. The cooling plate 8R includes the cooling center region B1 overlapped with the discharge center space S1 in an XY plane in a plan view and a cooling surrounding region B2 overlapped with the discharge surrounding space S2 in an XY plane in a plan view.

The cooling medium flow path 9R provided in the cooling plate 8R includes a cooling medium inlet 9Ra on a side of a side surface of the cooling plate 8R and a cooling medium outlet 9Rb in a center region on an upper surface of the cooling plate 8R, and is formed in a range from the cooling surrounding region B2 to the cooling center region B1. The cooling medium flow path 9R has a second surrounding priority cooling medium flow path structure of flowing the cooling medium C2 from the cooling medium inlet 9Ra toward the cooling medium outlet 9Rb, thereby flowing the cooling medium C2 to the cooling surrounding region B2 prior to the cooling center region B1.

The ozone generation apparatus according to the embodiment 4 including the electrode unit 64 includes the cooling plate 8R, thus can cool the discharge space 6 from a side of the low voltage electrode 1R by the low voltage electrode 1R including the cooling medium flow path 4R flowing the cooling medium C1 and can cool the discharge space 6 also from a side of the high voltage electrode 2 by the cooling plate 8R.

As a result, the ozone generation apparatus according to the embodiment 4 can further improve the effect of cooling the discharge space 6.

Furthermore, the cooling plate 8R in the ozone generation apparatus according to the embodiment 4 has the second surrounding priority cooling medium flow path structure described above, thus a temperature of the cooling surrounding region B2 near the ozone gas output space of the whole circumference of the discharge space 6 can be kept relatively low from the side of the high voltage electrode 2.

As a result, the ozone generation apparatus according to the embodiment 4 can suppress the second amount of the cooling medium C2 as the second cooling medium to a bare minimum and generate the ozone gas G2 having a relatively high concentration.

Also in the embodiment 4, the structure and effect similar to those of the first to fourth aspects of the embodiment 3 can be achieved by extending the basic configuration illustrated in Fig. 25.

The present disclosure is described in detail, however, the foregoing description is in all aspects illustrative, thus the present disclosure is not limited thereto. It is therefore understood that numerous modification examples not exemplified can be devised without departing from the scope of the present disclosure.

In the embodiments described above, the gas flow outlet 12 (12B and 12C) is provided to the center part of the low voltage electrode 1 (1A to 1D, 1AR, and 1DR); however, it is sufficient that at least one of the low voltage electrode 1 and the high voltage electrode 2 includes the gas flow outlet 12 in the center part.

### EXPLANATION OF REFERENCE SIGNS

1, 1A to 1D, 1AR, 1DR low voltage electrode
2 high voltage electrode
3 dielectric body
4, 4R, 9, 9R cooling medium flow path
5 insulating structure
6 discharge space
8, 8R cooling plate
11 gas supply port
12, 12B, 12C gas flow outlet
19 ozone gas ejection port
21 cooling medium supply port
22 cooling medium discharge port
30 ozone gas-cooling medium auxiliary member
35 ozone gas path
36 cooling medium supply path
37 cooling medium discharge path
55 ozone gas generation unit
61 to 64 electrode unit
C1, C2 cooling medium
E1, E1R, E2, E22, E22R electrode constituting part
G1 material gas
G2 ozone gas

## Claims

1. An ozone generation apparatus, comprising:
a plate-like first metal electrode;
a plate-like second metal electrode disposed to face the first metal electrode, wherein at least one of the first and second metal electrodes includes a gas flow outlet in a center part; and
at least one electrode dielectric body provided adjacent to at least one of the first and second metal electrodes between the first and second metal electrodes, wherein
a discharge space is provided to have contact with the at least one electrode dielectric body between the first and second metal electrodes,
dielectric barrier discharge is generated in the discharge space by applying voltage between the first and second metal electrodes;
material gas is supplied to the discharge space, and ozone gas is obtained by passing the material gas through the discharge space where the dielectric barrier discharge is generated,
the discharge space includes a discharge center space connected to the gas flow outlet and a discharge surrounding space around the discharge center space, and the material gas is supplied from the discharge surrounding space to the discharge center space,
at least one of the first and second metal electrodes is a metal electrode with a built-in flow path,
the metal electrode with the built-in flow path includes an electrode center region overlapped with the discharge center space in a plan view and an electrode surrounding region overlapped with the discharge surrounding space in a plan view,
the metal electrode with the built-in flow path includes a cooling medium flow path flowing a cooling medium inside, and the cooling medium flow path is formed in a range from the electrode center region to the electrode surrounding region,
the ozone gas obtained in the discharge space is outputted outside from the discharge center space through the gas flow outlet, and
the cooling medium flow path includes a center priority cooling medium flow path structure of flowing the cooling medium in the electrode center region prior to the electrode surrounding region.

2. The ozone generation apparatus according to claim 1, further comprising:
a cooling medium supply port receiving the cooling medium from outside; and
a cooling medium discharge port discharging the cooling medium outside, wherein
the cooling medium flow path includes:
at least one curved flow path changing a flow path direction; and
a plurality of circumferential flow paths each flowing the cooling medium along a flow path direction,
a pair of circumferential flow paths adjacent to each other in the plurality of circumferential flow paths are connected to each other so that flow path directions thereof are directions opposite to each other via one curved flow path in the at least one curved flow path,
the plurality of circumferential flow paths include a supply-side circumferential flow path connected to the cooling medium supply port and a discharge-side circumferential flow path connected to the cooling medium discharge port, the supply-side circumferential flow path in the plurality of circumferential flow paths is located closest to the gas flow outlet, and the discharge-side circumferential flow path is located farthest away from the gas flow outlet, and
the center priority cooling medium flow path structure includes a circumferential circulating flow path structure of flowing the cooling medium to the plurality of circumferential flow paths and the at least one curved flow path so that the cooling medium is supplied firstly from the cooling medium supply port to the supply-side circumferential flow path and is discharged outside finally from the discharge-side circumferential flow path through the cooling medium discharge port.

3. The ozone generation apparatus according to claim 2, wherein
the cooling medium flow path includes a plurality of partial cooling medium flow paths,
each of the plurality of partial cooling medium flow paths includes the plurality of circumferential flow paths and the at least one curved flow path,
the supply-side circumferential flow path of each of the plurality of partial cooling medium flow paths is connected to the cooling medium supply port,
the discharge-side circumferential flow path of each of the plurality of partial cooling medium flow paths is connected to the cooling medium discharge port, and
each of the plurality of partial cooling medium flow paths has the circumferential circulating flow path structure.

4. The ozone generation apparatus according to claim 2 or 3, wherein
the cooling medium supply port and the cooling medium discharge port are not overlapped with the discharge space in a plan view.

5. The ozone generation apparatus according to claim 4, wherein
the cooling medium supply port and the cooling medium discharge port are provided in a same direction with respect to the discharge space in a plan view.

6. The ozone generation apparatus according to any one of claims 1 to 5, wherein
the discharge space has a circular shape in a plan view.

7. The ozone generation apparatus according to any one of claims 1 to 6, wherein
the metal electrode with the built-in flow path includes the first metal electrode,
the ozone generation apparatus further comprising:
an insulating structure provided adjacent to the second metal electrode on a side opposite to the discharge space; and
a cooling plate provided adjacent to the insulating structure on a side opposite to the discharge space and having a cooling function.

8. The ozone generation apparatus according to claim 7, wherein
the cooling plate includes a second cooling medium flow path flowing a second cooling medium inside,
the cooling plate includes a cooling center region overlapped with the discharge center space in a plan view and a cooling surrounding region overlapped with the discharge surrounding space in a plan view, and
the second cooling medium flow path is formed in a range from the cooling center region to the cooling surrounding region, and has a second center priority cooling medium flow path structure of flowing the second cooling medium in the cooling center region prior to the cooling surrounding region.

9. An ozone generation method of generating ozone gas using an ozone generation apparatus, wherein
the ozone generation apparatus includes:
a plate-like first metal electrode having a gas flow outlet in a center part;
a plate-like second metal electrode disposed to face the first metal electrode; and
at least one electrode dielectric body provided adjacent to at least one of the first and second metal electrodes between the first and second metal electrodes, wherein
a discharge space is provided to have contact with the at least one electrode dielectric body between the first and second metal electrodes,
the discharge space includes a discharge center space connected to the gas flow outlet and a discharge surrounding space around the discharge center space,
at least one of the first and second metal electrodes is a metal electrode with a built-in flow path,
the metal electrode with the built-in flow path includes an electrode center region overlapped with the discharge center space in a plan view and an electrode surrounding region overlapped with the discharge surrounding space in a plan view, and
the metal electrode with the built-in flow path includes a cooling medium flow path flowing a cooling medium inside, and the cooling medium flow path is formed in a range from the electrode center region to the electrode surrounding region,
the ozone generation method, comprising steps of:
(a) applying voltage between the first and second metal electrodes to generate dielectric barrier discharge in the discharge space;
(b) performing center priority cooling medium flow path setting processing of flowing the cooling medium in the electrode center region prior to the electrode surrounding region in the cooling medium flow path; and
(c) supplying material gas from an area around the discharge surrounding space toward the discharge center space to obtain the ozone gas in the discharge space, wherein
the ozone gas obtained in the discharge space is outputted outside from the discharge center space through the gas flow outlet.

10. The ozone generation method according to claim 9, wherein
the ozone generation apparatus further includes:
a cooling medium supply port receiving the cooling medium from outside; and
a cooling medium discharge port discharging the cooling medium outside, wherein
the cooling medium flow path includes:
at least one curved flow path changing a flow path direction; and
a plurality of circumferential flow paths each flowing the cooling medium along a flow path direction,
a pair of circumferential flow paths adjacent to each other in the plurality of circumferential flow paths are connected to each other so that flow path directions thereof are directions opposite to each other via one curved flow path in the at least one curved flow path,
the plurality of circumferential flow paths include a supply-side circumferential flow path connected to the cooling medium supply port and a discharge-side circumferential flow path connected to the cooling medium discharge port, the supply-side circumferential flow path in the plurality of circumferential flow paths is located closest to the gas flow outlet, and the discharge-side circumferential flow path is located farthest away from the gas flow outlet,
the center priority cooling medium flow path setting processing in the step (b) includes steps of:
(b-1) supplying the cooling medium to the supply-side circumferential flow path from the cooling medium supply port; and
(b-2) discharging the cooling medium to the cooling medium discharge port from the discharge-side circumferential flow path, and
set by performing the steps (b-1) and (b-2) is a circumferential circulating flow path in which the cooling medium flows to the plurality of circumferential flow paths and the at least one curved flow path so that the cooling medium is supplied firstly from the cooling medium supply port to the supply-side circumferential flow path and is discharged outside finally from the discharge-side circumferential flow path through the cooling medium discharge port in the cooling medium flow path.

11. An ozone generation apparatus, comprising:
a plate-like first metal electrode;
a plate-like second metal electrode disposed to face the first metal electrode, wherein at least one of the first and second metal electrodes includes a gas flow outlet in a center part; and
at least one electrode dielectric body provided adjacent to at least one of the first and second metal electrodes between the first and second metal electrodes, wherein
a discharge space is provided to have contact with the at least one electrode dielectric body between the first and second metal electrodes,
dielectric barrier discharge is generated in the discharge space by applying voltage between the first and second metal electrodes;
material gas is supplied to the discharge space through the gas supply port, and ozone gas is obtained by passing the material gas through the discharge space where the dielectric barrier discharge is generated,
the discharge space includes a discharge center space connected to the gas supply port and a discharge surrounding space around the discharge center space, the material gas is supplied from the discharge center space to the discharge surrounding space, and an outer space connected to the discharge surrounding space is an ozone output space,
at least one of the first and second metal electrodes is a metal electrode with a built-in flow path,
the metal electrode with the built-in flow path includes an electrode center region overlapped with the discharge center space in a plan view and an electrode surrounding region overlapped with the discharge surrounding space in a plan view,
the metal electrode with the built-in flow path includes a cooling medium flow path flowing a cooling medium inside, and the cooling medium flow path is formed in a range from the electrode surrounding region to the electrode center region,
the ozone gas obtained in the discharge space is outputted from the discharge surrounding space to the ozone gas output space, and
the cooling medium flow path includes a surrounding priority cooling medium flow path structure of flowing the cooling medium in the electrode surrounding region prior to the electrode center region.

12. The ozone generation apparatus according to claim 11, further comprising:
a cooling medium supply port receiving the cooling medium from outside; and
a cooling medium discharge port discharging the cooling medium outside, wherein
the cooling medium flow path includes:
at least one curved flow path changing a flow path direction; and
a plurality of circumferential flow paths each flowing the cooling medium along a flow path direction,
a pair of circumferential flow paths adjacent to each other in the plurality of circumferential flow paths are connected to each other so that flow path directions thereof are directions opposite to each other via one curved flow path in the at least one curved flow path,
the plurality of circumferential flow paths include a supply-side circumferential flow path connected to the cooling medium supply port and a discharge-side circumferential flow path connected to the cooling medium discharge port, the supply-side circumferential flow path in the plurality of circumferential flow paths is located farthest away from the gas supply port, and the discharge-side circumferential flow path is located closest to the gas supply port, and
the surrounding priority cooling medium flow path structure includes a circumferential circulating flow path structure of flowing the cooling medium to the plurality of circumferential flow paths and the at least one curved flow path so that the cooling medium is supplied firstly from the cooling medium supply port to the supply-side circumferential flow path and is discharged outside finally from the discharge-side circumferential flow path through the cooling medium discharge port.

13. The ozone generation apparatus according to claim 12, wherein
the cooling medium flow path includes a plurality of partial cooling medium flow paths,
each of the plurality of partial cooling medium flow paths includes the plurality of circumferential flow paths and the at least one curved flow path,
the supply-side circumferential flow path of each of the plurality of partial cooling medium flow paths is connected to the cooling medium supply port,
the discharge-side circumferential flow path of each of the plurality of partial cooling medium flow paths is connected to the cooling medium discharge port, and
each of the plurality of partial cooling medium flow paths has the circumferential circulating flow path structure.

14. The ozone generation apparatus according to claim 12 or 13, wherein
the cooling medium supply port and the cooling medium discharge port are not overlapped with the discharge space in a plan view.

15. The ozone generation apparatus according to claim 14, wherein
the cooling medium supply port and the cooling medium discharge port are provided in a same direction with respect to the discharge space in a plan view.

16. The ozone generation apparatus according to any one of claims 11 to 15, wherein
the discharge space has a circular shape in a plan view.

17. The ozone generation apparatus according to any one of claims 11 to 16, wherein
the metal electrode with the built-in flow path includes the first metal electrode,
the ozone generation apparatus further comprising:
an insulating structure provided adjacent to the second metal electrode on a side opposite to the discharge space; and
a cooling plate provided adjacent to the insulating structure on a side opposite to the discharge space and having a cooling function.

18. The ozone generation apparatus according to claim 17, wherein
the cooling plate includes a second cooling medium flow path flowing a second cooling medium inside,
the cooling plate includes a cooling center region overlapped with the discharge center space in a plan view and a cooling surrounding region overlapped with the discharge surrounding space in a plan view, and
the second cooling medium flow path is formed in a range from the cooling surrounding region to the cooling center region, and has a second surrounding priority cooling medium flow path structure of flowing the second cooling medium in the cooling surrounding region prior to the cooling center region.
